(19) Europäisches Patentamt
European Patent Office
Office européen des brevets

(11) EP 3 683 260 A1

(12) EUROPEAN PATENT APPLICATION
published in accordance with Art. 153(4) EPC

(43) Date of publication:
**22.07.2020 Bulletin 2020/30**

(21) Application number: **18894880.6**

(22) Date of filing: **19.12.2018**

(51) Int Cl.:
***C08L 9/00*** *(2006.01)* ***B60C 1/00*** *(2006.01)*
***C08K 3/36*** *(2006.01)* ***C08L 7/00*** *(2006.01)*

(86) International application number:
**PCT/JP2018/046868**

(87) International publication number:
**WO 2019/131405 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2017 JP 2017249416**

(71) Applicant: **SUMITOMO RUBBER INDUSTRIES, LTD.**
**Chuo-ku**
**Kobe-shi**
**Hyogo 651-0072 (JP)**

(72) Inventors:
- **SAWAKI, Haruko**
  **Kobe-shi, Hyogo 651-0072 (JP)**
- **YOSHIOKA, Mikako**
  **Kobe-shi, Hyogo 651-0072 (JP)**
- **YOKOYAMA, Yuka**
  **Kobe-shi, Hyogo 651-0072 (JP)**

(74) Representative: **TBK**
**Bavariaring 4-6**
**80336 München (DE)**

# (54) TREAD RUBBER COMPOSITION FOR STUDLESS WINTER TIRES

(57) The present invention provides a rubber composition for studless winter tires that provides improved performance on ice and a studless winter tire including the rubber composition. The present invention relates to a tread rubber composition for studless winter tires containing: a rubber component including an isoprene-based rubber and a conjugated diene polymer; a water-soluble fine particle; and a liquid plasticizer, the liquid plasticizer being present in an amount of 30 parts by mass or less per 100 parts by mass of the rubber component.

EP 3 683 260 A1

## Description

### TECHNICAL FIELD

The present invention relates to a tread rubber composition for studless winter tires and a studless winter tire including the tread rubber composition.

### BACKGROUND ART

Studded tires or tire chains have been used for driving on snowy and icy roads. However, since they can cause environmental problems such as dust pollution, studless winter tires have been proposed to replace them. The materials and structure of the studless winter tires are designed to allow the tires to be used on snowy and icy roads with rougher surfaces than normal roads. For example, there have been developed rubber compositions which contain diene rubbers having excellent low-temperature properties, or which contain a large amount of softeners to enhance the softening effect (see, for example, Patent Literature 1). However, such rubber compositions still leave room for improvement in order to obtain good performance on ice.

### CITATION LIST

### PATENT LITERATURE

Patent Literature 1: JP 2009-091482 A

### SUMMARY OF INVENTION

### TECHNICAL PROBLEM

In this context, the present invention aims to provide a rubber composition for studless winter tires that provides improved performance on ice and a studless winter tire including the rubber composition.

### SOLUTION TO PROBLEM

The present invention relates to a tread rubber composition for studless winter tires, containing: a rubber component including an isoprene-based rubber and a conjugated diene polymer; a water-soluble fine particle; and a liquid plasticizer, the liquid plasticizer being present in an amount of 30 parts by mass or less per 100 parts by mass of the rubber component.

Preferably, the isoprene-based rubber is present in an amount of 20% by mass or more, and the conjugated diene polymer is present in an amount of 20% by mass or more, each based on 100% by mass of the rubber component, and the tread rubber composition contains silica in an amount of 50% by mass or more based on a total of 100% by mass of silica and carbon black.

Preferably, the water-soluble fine particle is present in an amount of 25 parts by mass or more per 100 parts by mass of the rubber component.

Preferably, the conjugated diene polymer has a cis content of 90% by mass or higher.

Another aspect of the present invention is a studless winter tire, including a tread formed from the rubber composition.

Preferably, the tread of the studless winter tire has a road contact surface with pores having an average diameter of 0.1 to 100 $\mu$m after the following running conditions:

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

Preferably, the studless winter tire has a rate of reduction in pattern noise from before to after the following running conditions, which is enhanced by 2 to 10% as compared with a studless winter tire including a tread formed from a rubber composition having the same formulation except for containing no water-soluble fine particle:

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

ADVANTAGEOUS EFFECTS OF INVENTION

The tread rubber composition for studless winter tires of the present invention contains a rubber component including an isoprene-based rubber and a conjugated diene polymer, a water-soluble fine particle, and a liquid plasticizer. The liquid plasticizer is present in an amount of 30 parts by mass or less per 100 parts by mass of the rubber component. Such a tread rubber composition provides improved performance on ice.

DESCRIPTION OF EMBODIMENTS

The tread rubber composition for studless winter tires of the present invention contains: a rubber component including an isoprene-based rubber and a conjugated diene polymer; a water-soluble fine particle; and a liquid plasticizer. Further, the amount of the liquid plasticizer is not more than a predetermined amount. The rubber composition provides improved performance on ice (at air temperatures of -5 to 0°C) .

(Rubber component)

The rubber composition contains a rubber component including an isoprene-based rubber and a conjugated diene polymer.

Examples of the isoprene-based rubber include natural rubber (NR), polyisoprene rubber (IR), refined NR, modified NR, and modified IR. The NR and IR may be those usually used in the tire industry, such as SIR20, RSS#3, and TSR20 for the NR, and IR2200 for the IR. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These isoprene-based rubbers may be used alone, or two or more of these may be used in combination.

In view of properties such as performance on ice, the amount of the isoprene-based rubber based on 100% by mass of the rubber component is preferably 20% by mass or more, more preferably 30% by mass or more. The upper limit of the amount is not particularly critical but is preferably 80% by mass or less, more preferably 60% by mass or less, still more preferably 50% by mass or less.

The conjugated diene polymer may be a polymer having a repeating unit derived from at least one monomer selected from the group consisting of 1,3-butadiene, isoprene, 2,3-dimethyl-1,3-butadiene, 1,3-pentadiene, 1,3-hexadiene, and myrcene. In particular, it may suitably be a polymer having a repeating unit derived from at least one monomer selected from the group consisting of 1,3-butadiene, isoprene, and 2,3-dimethyl-1,3-butadiene. Thus, in another suitable embodiment of the present invention, the conjugated diene polymer is formed from at least one conjugated diene compound selected from the group consisting of 1,3-butadiene, isoprene, and 2,3-dimethyl-1,3-butadiene. In a particularly preferred embodiment, the conjugated diene polymer is a polybutadiene rubber (BR).

The BR is not particularly limited, and examples include those usually used in the tire industry, such as high-cis BR, BR containing 1,2-syndiotactic polybutadiene crystals (SPB-containing BR), polybutadiene rubber synthesized using rare earth catalysts (rare earth-catalyzed BR), and tin-modified polybutadiene rubber (tin-modified BR) obtained by modification with tin compounds. Commercial products of such BR include products from Ube Industries, Ltd., JSR Corporation, Asahi Kasei Corporation, and Zeon Corporation. These types of BR may be used alone, or two or more of these may be used in combination.

The conjugated diene polymer preferably has a cis content of 80% by mass or higher, more preferably 85% by mass or higher, still more preferably 90% by mass or higher, particularly preferably 95% by mass or higher. With such a conjugated diene polymer, better performance on ice can be obtained.

Herein, the cis content (cis-1,4 bond content) is calculated from signal intensities measured by infrared absorption spectrometry or NMR analysis.

In view of properties such as performance on ice, the amount of the conjugated diene polymer based on 100% by mass of the rubber component is preferably 10% by mass or more, more preferably 20% by mass or more, still more preferably 30% by mass or more, further preferably 45% by mass or more. The upper limit of the amount is not particularly critical but is preferably 90% by mass or less, more preferably 80% by mass or less, still more preferably 70% by mass or less.

The conjugated diene polymer may be either an unmodified conjugated diene polymer or a modified conjugated

diene polymer.

The modified conjugated diene polymer may be, for example, a conjugated diene polymer having a functional group interactive with a filler such as silica. For example, it may be a chain end-modified conjugated diene polymer obtained by modifying at least one chain end of a conjugated diene polymer with a compound (modifier) having the functional group (i.e., a chain end-modified conjugated diene polymer terminated with the functional group); a backbone-modified conjugated diene polymer having the functional group in the backbone; a backbone- and chain end-modified conjugated diene polymer having the functional group in both the backbone and chain end (e.g., a backbone- and chain end-modified conjugated diene polymer in which the backbone has the functional group and at least one chain end is modified with the modifier); or a chain end-modified conjugated diene polymer that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

The modified conjugated diene polymer may suitably be, for example, a conjugated diene polymer modified with a compound (modifier) represented by the following formula:

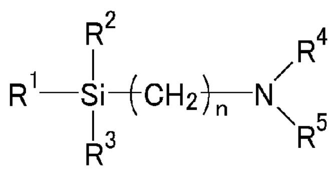

wherein $R^1$, $R^2$, and $R^3$ are the same or different and each represent an alkyl, alkoxy, silyloxy, acetal, carboxyl (-COOH), or mercapto (-SH) group or a derivative thereof; $R^4$ and $R^5$ are the same or different and each represent a hydrogen atom or an alkyl group, and $R^4$ and $R^5$ may be joined together to form a ring structure with the nitrogen atom; and n represents an integer.

The modified conjugated diene polymer modified with a compound (modifier) of the above formula may suitably be, for example, a solution-polymerized polybutadiene rubber (BR) having a polymerizing end (active terminal) modified with a compound of the above formula.

$R^1$, $R^2$, and $R^3$ may each suitably be an alkoxy group, preferably a C1-C8, more preferably C1-C4, alkoxy group. $R^4$ and $R^5$ may each suitably be an alkyl group, preferably a C1-C3 alkyl group. The symbol n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy groups (e.g. cyclohexyloxy group) and aryloxy groups (e.g. phenoxy and benzyloxy groups).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane. These modifiers may be used alone, or two or more of these may be used in combination.

The modified conjugated diene polymer may also suitably be a modified conjugated diene polymer that has been modified with any of the following compounds (modifiers), including: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1, 4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and

N,N-bis(2,3-epoxypropoxy)-aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. In particular, it is preferably a modified conjugated diene polymer modified with an alkoxysilane.

The modification with the compound (modifier) may be carried out by known methods.

In the rubber composition, the combined amount of the isoprene-based rubber and the conjugated diene polymer based on 100% by mass of the rubber component is preferably 30% by mass or more, more preferably 60% by mass or more, still more preferably 80% by mass or more, and may be 100% by mass. A higher combined amount tends to lead to better low-temperature properties, thereby providing desired performance on ice.

The rubber component of the rubber composition may include additional rubbers as long as the effects are not impaired. Examples of such additional rubbers include diene rubbers such as styrene butadiene rubber (SBR), acrylonitrile butadiene rubber (NBR), chloroprene rubber (CR), butyl rubber (IIR), and styrene-isoprene-butadiene copolymer rubber (SIBR) .

(Water-soluble fine particle)

The water-soluble fine particle may be any fine particle soluble in water. For example, materials having a water solubility of at least 1 g/100 g of water at room temperature (20°C) may be used.

In view of properties such as performance on ice, the water-soluble fine particle preferably has a median particle size (median size, D50) of 1 μm to 1 mm, more preferably 2 μm to 800 μm, still more preferably 2 μm to 500 μm.

Herein, the median particle size may be measured by laser diffraction.

The amount of the water-soluble fine particle per 100 parts by mass of the rubber component is preferably 1 part by mass or more, more preferably 5 parts by mass or more, still more preferably 15 parts by mass or more, further preferably 20 parts by mass or more, particularly preferably 25 parts by mass or more. When the amount is not less than the lower limit, good performance on ice tends to be obtained. The amount is also preferably 100 parts by mass or less, more preferably 70 parts by mass or less, still more preferably 50 parts by mass or less, particularly preferably 40 parts by mass or less. When the amount is not more than the upper limit, good rubber physical properties such as tensile strength and abrasion resistance tend to be obtained.

Examples of the water-soluble fine particle include water-soluble inorganic salts and water-soluble organic substances. These types of water-soluble fine particles may be used alone, or two or more of these may be used in combination.

Examples of the water-soluble inorganic salts include metal sulfates such as magnesium sulfate and potassium sulfate; metal chlorides such as potassium chloride, sodium chloride, calcium chloride, and magnesium chloride; metal hydroxides such as potassium hydroxide and sodium hydroxide; carbonates such as potassium carbonate and sodium carbonate; and phosphates such as sodium hydrogen phosphate and sodium dihydrogen phosphate.

Examples of the water-soluble organic substances include lignin derivatives and saccharides.

Suitable examples of the lignin derivatives include lignin sulfonic acid and lignosulfonates. The lignin derivatives may be prepared either by a sulfite pulping method or a kraft pulping method.

Examples of the lignosulfonates include alkali metal salts, alkaline earth metal salts, ammonium salts, and alcohol amine salts of lignin sulfonic acid. Preferred among these are alkali metal salts (e.g. potassium or sodium salts) and alkaline earth metal salts (e.g. calcium, magnesium, lithium, or barium salts) of lignin sulfonic acid.

The lignin derivative preferably has a degree of sulfonation of 1.5 to 8.0/$OCH_3$. Such a lignin derivative includes a lignin sulfonic acid and/or lignosulfonate in which lignin and/or a degradation product thereof is at least partially substituted with a sulfo group (sulfone group). The sulfo group of the lignin sulfonic acid may be unionized, or the

hydrogen atom of the sulfo group may be replaced by an ion such as a metal ion. The degree of sulfonation is more preferably 3.0 to 6.0/$OCH_3$. When the degree of sulfonation is within the above-mentioned range, good performance on ice tends to be obtained.

The degree of sulfonation of the lignin derivative particle (lignin derivative that forms the particle) refers to the ratio of introduced sulfo groups calculated by the following equation:

Degree of sulfonation (/$OCH_3$) = (S (mol) in the sulfone groups in the lignin derivative)/(the methoxyl groups (mol) of the lignin derivative).

The saccharide may be any monosaccharide, oligosaccharide, or polysaccharide having any number of carbon atoms. Examples of such monosaccharides include trioses such as aldotriose and ketotriose; tetroses such as erythrose and threose; pentoses such as xylose and ribose; hexoses such as mannose, allose, altrose, and glucose; and heptoses such as sedoheptulose. Examples of such oligosaccharides include disaccharides such as sucrose and lactose; trisaccharides such as raffinose and melezitose; tetrasaccharides such as acarbose and stachyose; and higher oligosaccharides such as xylooligosaccharide and cellooligosaccharide. Examples of such polysaccharides include glycogen, starch (amylose, amylopectin), cellulose, hemicellulose, dextrin, and glucan.

(Silica)

In view of properties such as performance on ice, the rubber composition preferably contains silica as filler. Examples of the silica include dry silica (anhydrous silica) and wet silica (hydrous silica). Among these, wet silica is preferred because it contains a large number of silanol groups. Commercial products of the silica include products from Degussa, Rhodia, Tosoh Silica Corporation, Solvay Japan, and Tokuyama Corporation. These types of silica may be used alone, or two or more of these may be used in combination.

The amount of the silica per 100 parts by mass of the rubber component is preferably 25 parts by mass or more, more preferably 30 parts by mass or more, still more preferably 50 parts by mass or more, further preferably 55 parts by mass or more, particularly preferably 60 parts by mass or more. The upper limit of the amount is not particularly critical but is preferably 300 parts by mass or less, more preferably 200 parts by mass or less, still more preferably 170 parts by mass or less, particularly preferably 100 parts by mass or less, most preferably 80 parts by mass or less. Silica in an amount within the above-mentioned range tends to disperse well, thereby resulting in good properties such as performance on ice.

The silica preferably has a nitrogen adsorption specific surface area ($N_2SA$) of 70 $m^2/g$ or more, more preferably 140 $m^2/g$ or more, still more preferably 160 $m^2/g$ or more. The upper limit of the $N_2SA$ of the silica is not particularly critical but is preferably 500 $m^2/g$ or less, more preferably 300 $m^2/g$ or less, still more preferably 250 $m^2/g$ or less. Silica having a nitrogen adsorption specific surface area ($N_2SA$) within the above-mentioned range tends to disperse well, thereby resulting in good properties such as performance on ice.

The $N_2SA$ of the silica is measured by the BET method in accordance with ASTM D3037-93.

In view of properties such as performance on ice, the amount of the silica in the rubber composition is preferably 50% by mass or more, more preferably 80% by mass or more, still more preferably 90% by mass or more, based on a total of 100% by mass of silica and carbon black.

(Silane coupling agent)

The rubber composition containing silica preferably also contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products of such silane coupling agents include products from Degussa, Momentive, Shin-Etsu Silicone, Tokyo Chemical Industry Co., Ltd., AZmax. Co., and Dow Corning Toray Co., Ltd. These silane coupling agents may be used alone, or two or more of these may be used in combination.

The amount of the silane coupling agent per 100 parts by mass of the silica is preferably 3 parts by mass or more, more preferably 6 parts by mass or more, but is preferably 20 parts by mass or less, more preferably 15 parts by mass or less, still more preferably 12 parts by mass or less, further preferably 10 parts by mass or less. The silane coupling agent in an amount within the above-mentioned range tends to provide an effect commensurate with the amount, thereby resulting in good properties such as performance on ice.

(Carbon black)

In view of properties such as performance on ice, the rubber composition preferably contains carbon black as filler. Non-limiting examples of the carbon black include N134, N110, N220, N234, N219, N339, N330, N326, N351, N550, and N762. Commercial products of such carbon black include products from Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon. These types of carbon black may be used alone, or two or more of these may be used in combination.

The amount of the carbon black per 100 parts by mass of the rubber component is preferably 1 part by mass or more, more preferably 3 parts by mass or more, but is preferably 10 parts by mass or less, more preferably 7 parts by mass or less. When the amount of the carbon black is within the above-mentioned range, good properties such as performance on ice tend to be obtained.

The carbon black preferably has a nitrogen adsorption specific surface area ($N_2SA$) of 50 $m^2/g$ or more, more preferably 80 $m^2/g$ or more, still more preferably 100 $m^2/g$ or more, but preferably 200 $m^2/g$ or less, more preferably 150 $m^2/g$ or less, still more preferably 130 $m^2/g$ or less. Carbon black having a nitrogen adsorption specific surface area ($N_2SA$) within the above-mentioned range tends to disperse well, thereby resulting in good properties such as performance on ice.

The nitrogen adsorption specific surface area of the carbon black is determined in accordance with JIS K6217-2 : 2001.

(Liquid plasticizer)

The rubber composition contains a liquid plasticizer in an amount of 30 parts by mass or less per 100 parts by mass of the rubber component. With such an amount, good properties such as performance on ice can be obtained. The amount of the liquid plasticizer is preferably 20 parts by mass or less, more preferably 10 parts by mass or less. The lower limit of the amount is not particularly critical, and no liquid plasticizer may be present. In view of properties such as performance on ice, the lower limit is preferably 5 parts by mass or more, more preferably 7 parts by mass or more.

The liquid plasticizer may be any plasticizer that is liquid at 20°C. Examples include oils, liquid resins, and liquid diene polymers. These plasticizers may be used alone, or two or more of these may be used in combination.

Examples of the oils include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products of such oils include products from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., and The Nisshin OilliO Group, Ltd.

Examples of the liquid resins include resins that are liquid at 20°C, such as terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins.

Examples of the liquid diene polymers include diene polymers that are liquid at 20°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene butadiene copolymers. The chain end or backbone of these polymers may be modified with a polar group.

The rubber composition may contain a resin (solid resin: resin that is solid at room temperature (25°C)).

Examples of the resin (solid resin) include aromatic vinyl polymers, coumarone-indene resins, coumarone resins, indene resins, phenol resins, rosin resins, petroleum resins, terpene resins, and acrylic resins. Commercial products of such resins include products from Maruzen Petrochemical Co., Ltd., Sumitomo Bakelite Co., Ltd., Yasuhara

Chemical Co., Ltd., Tosoh Corporation, Rutgers Chemicals, BASF, Arizona Chemical, Nitto Chemical Co., Ltd., Nippon Shokubai Co., Ltd., JX energy, Arakawa Chemical Industries, Ltd., Taoka Chemical Co., Ltd., and Toagosei Co., Ltd. These resins may be used alone, or two or more of these may be used in combination.

The term "aromatic vinyl polymer" refers to a resin produced by polymerizing α-methylstyrene and/or styrene. Examples include styrene homopolymers (styrene resins), α-methylstyrene homopolymers (a-methylstyrene resins), copolymers of α-methylstyrene and styrene, and copolymers of styrene and other monomers.

The term "coumarone-indene resin" refers to a resin that contains coumarone and indene as main monomer components forming the skeleton (backbone) of the resin. Examples of monomer components which may be contained in the skeleton other than coumarone and indene include styrene, α-methylstyrene, methylindene, and vinyltoluene.

The term "coumarone resin" refers to a resin that contains coumarone as a main monomer component forming the skeleton (backbone) of the resin.

The term "indene resin" refers to a resin that contains indene as a main monomer component forming the skeleton (backbone) of the resin.

Examples of the phenol resins include those produced by reacting phenol with aldehydes such as formaldehyde, acetaldehyde, or furfural in the presence of acid or alkali catalysts. In particular, phenol resins produced by reactions using acid catalysts (e.g., novolac-type phenol resins) are preferred.

Examples of the rosin resins include rosin-based resins such as typically natural rosins, polymerized rosins, modified rosins, esterified compounds thereof, and hydrogenated products thereof.

Examples of the petroleum resins include C5 resins, C9 resins, C5/C9 resins, and dicyclopentadiene (DCPD) resins.

Examples of the terpene resins include polyterpene resins produced by polymerization of terpene compounds, and aromatic modified terpene resins produced by polymerization of terpene compounds and aromatic compounds. Hydrogenated products of the foregoing resins may also be used.

The term "polyterpene resin" refers to a resin produced by polymerizing a terpene compound. The term "terpene compound" refers to a hydrocarbon having a composition represented by $(C_5H_8)_n$ or an oxygen-containing derivative thereof, each of which has a terpene backbone and is classified as, for example, a monoterpene ($C_{10}H_{16}$), sesquiterpene ($C_{15}H_{24}$), or diterpene ($C_{20}H_{32}$). Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Preferred among these are pinene resins because their polymerization reaction is simple, and they are made from pine resin and therefore inexpensive. Pinene resins, which usually contain two isomers, i.e. α-pinene and β-pinene, are classified into β-pinene resins mainly containing β-pinene and α-pinene resins mainly containing α-pinene, depending on the proportions of the components in the resins.

Examples of the aromatic modified terpene resins include terpene phenol resins made from the above-mentioned terpene compounds and phenolic compounds, and terpene styrene resins made from the above-mentioned terpene compounds and styrene compounds. Terpene phenol styrene resins made from the terpene compounds, phenolic compounds, and styrene compounds may also be used. Examples of the phenolic compounds include phenol, bisphenol A, cresol, and xylenol. Examples of the styrene compounds include styrene and α-methylstyrene.

Examples of the acrylic resins include styrene acrylic resins such as styrene acrylic resins containing carboxyl groups which are produced by copolymerization of aromatic vinyl and acrylic monomer components. In particular, solvent-free, carboxyl group-containing styrene acrylic resins are suitable.

The solvent-free, carboxyl group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components used to form the acrylic resins include (meth) acrylic acid and (meth) acrylic acid derivatives such as (meth) acrylic acid esters (e.g., alkyl esters, aryl esters, and aralkyl esters such as 2-ethylhexyl acrylate), (meth) acrylamide, and (meth) acrylamide derivatives. The term " (meth) acrylic acid" is a general term for acrylic acid and methacrylic acid.

Examples of the aromatic vinyl monomer components used to form the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives, and aromatic vinyls, other monomer components may also be used as monomer components to form the acrylic resins.

In view of rigidity, the combined amount of the resin (solid resin) and liquid plasticizer per 100 parts by mass of the rubber component in the rubber composition is preferably 60 parts by mass or less, more preferably 35 parts by mass or less, still more preferably 30 parts by mass or less. The lower limit of the combined amount is not particularly critical, and no resin and/or no liquid plasticizer may be present. In view of properties such as performance on ice, the lower limit is preferably 5 parts by mass or more, more preferably 7 parts by mass or more.

(Other materials)

In view of properties such as crack resistance and ozone resistance, the rubber composition preferably contains an antioxidant.

Non-limiting examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. Among these, p-phenylenediamine antioxidants or quinoline antioxidants are preferred, with N-(1,3-dimethylbutyl)-N'-phenyl-p-phenylenediamine or 2,2,4-trimethyl-1,2-dihydroquinoline polymer being more preferred. Commercial products of such antioxidants include products from Seiko Chemical Co., Ltd., Sumitomo Chemical Co., Ltd., Ouchi Shinko Chemical Industrial Co., Ltd., and Flexsys.

The amount of the antioxidant per 100 parts by mass of the rubber component is preferably 0.2 parts by mass or more, more preferably 0.5 parts by mass or more. When the amount is not less than the lower limit, sufficient ozone resistance tends to be obtained. The amount is also preferably 7.0 parts by mass or less, more preferably 4.0 parts by mass or less. When the amount is not more than the upper limit, good tire appearance tends to be obtained.

The rubber composition preferably contains stearic acid. The amount of the stearic acid per 100 parts by mass of the rubber component is preferably 0.5 to 10 parts by mass, more preferably 0.5 to 5 parts by mass.

The stearic acid may be a conventional one, and examples include products from NOF Corporation, Kao Corporation, FUJIFILM Wako Pure Chemical Corporation, and Chiba Fatty Acid Co., Ltd.

The rubber composition preferably contains zinc oxide. The amount of the zinc oxide per 100 parts by mass of the rubber component is preferably 0.5 to 10 parts by mass, more preferably 1 to 5 parts by mass.

The zinc oxide may be a conventional one, and examples include products from Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The rubber composition may contain a wax. Non-limiting examples of the wax include petroleum waxes, natural waxes, and synthetic waxes produced by purifying or chemically treating a plurality of waxes. These waxes may be used alone, or two or more of these may be used in combination.

Examples of the petroleum waxes include paraffin waxes and microcrystalline waxes. The natural wax may be any wax derived from non-petroleum resources, and examples include plant waxes such as candelilla wax, carnauba wax, Japan wax, rice bran wax, and jojoba wax; animal waxes such as beeswax, lanolin, and spermaceti; mineral waxes such as ozokerite, ceresin, and petrolatum; and purified products of the foregoing. Commercial products of such waxes include products from Ouchi Shinko Chemical Industrial Co., Ltd., Nippon Seiro Co., Ltd., and Seiko Chemical Co., Ltd. The amount of the wax may be appropriately selected in view of ozone resistance and cost.

The rubber composition preferably contains sulfur in order to moderately crosslink the polymer chains to provide good properties.

The amount of the sulfur per 100 parts by mass of the rubber component is preferably 0.1 parts by mass or more, more preferably 0.5 parts by mass or more, still more preferably 0.7 parts by mass or more, but is preferably 6.0 parts by mass or less, more preferably 4.0 parts by mass or less, still more preferably 3.0 parts by mass or less. When the amount is within the above-mentioned range, good properties tend to be obtained.

Examples of the sulfur include those usually used in the rubber industry, such as powdered sulfur, precipitated sulfur, colloidal sulfur, insoluble sulfur, highly dispersible sulfur, and soluble sulfur. Commercial products of such sulfur include products from Tsurumi Chemical Industry Co., Ltd., Karuizawa Sulfur Co., Ltd., Shikoku Chemicals Corporation, Flexsys, Nippon Kanryu Industry Co., Ltd., and Hosoi Chemical Industry Co., Ltd. These types of sulfur may be used alone, or two or more of these may be used in combination.

The rubber composition preferably contains a vulcanization accelerator.

The amount of the vulcanization accelerator is not particularly critical and may be arbitrarily selected depending on the desired cure rate or crosslink density. The amount is usually 0.3 to 10 parts by mass, preferably 0.5 to 7 parts by mass per 100 parts by mass of the rubber component.

Any type of vulcanization accelerator may be used including those usually used. Examples of the vulcanization accelerator include thiazole vulcanization accelerators such as 2-mercaptobenzothiazole, di-2-benzothiazolyl disulfide,

and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used alone, or two or more of these may be used in combination. Among these, sulfenamide vulcanization accelerators or guanidine vulcanization accelerators are preferred.

In addition to the above-mentioned components, the rubber composition may appropriately contain other compounding agents usually used in the tire industry such as release agents.

The rubber composition may be prepared by known methods. For example, it may be prepared by kneading the components using a rubber kneading machine such as an open roll mill or Banbury mixer, and vulcanizing the kneaded mixture.

The kneading conditions are as follows. In a base kneading step that includes kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step that includes kneading vulcanizing agents and vulcanization accelerators, the kneading temperature is usually 100°C or lower, preferably from room temperature to 80°C. The composition obtained after kneading vulcanizing agents and vulcanization accelerators is usually vulcanized by, for example, press vulcanization. The vulcanization temperature is usually 120 to 200°C, preferably 140 to 180°C.

The rubber composition may be prepared by common methods . Specifically, it may be prepared by kneading the components in a kneading machine such as a Banbury mixer, kneader, or open roll mill, and vulcanizing the kneaded mixture. The rubber composition is for use in treads (monolayer treads, cap treads of multilayer treads) of studless winter tires.

(Studless winter tire)

The studless winter tire of the present invention may be produced using the rubber composition by usual methods. Specifically, the unvulcanized rubber composition containing the above-mentioned components may be extruded into the shape of a tread (e.g. cap tread), and assembled with other tire components in a tire building machine in a usual manner to form an unvulcanized tire, which may then be heated and pressurized in a vulcanizer to produce a studless winter tire. The studless winter tire of the present invention is suitable for passenger vehicles.

The tread of the studless winter tire preferably has a road contact surface with pores having an average diameter of 0.1 to 100 μm after the running conditions indicated below. When a studless winter tire including a tread formed from the rubber composition of the present invention has such a feature, the studless winter tire can achieve improved performance on ice and reduced noise while maintaining handling stability.

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

The average diameter of the pores is preferably 0.1 to 100 μm, but in view of handling stability, performance on ice, and reduced noise, it is more preferably 1 μm or more, still more preferably 10 μm or more, but more preferably 80 μm or less, still more preferably 70 μm or less.

Herein, the average diameter of the pores can be determined by scanning electron microscopy (SEM). Specifically, the pores may be photographed with a scanning electron microscope and then the diameter of each pore may be determined as the spherical diameter when it has a spherical shape, the minor diameter when it has a needle- or rod-like shape, or the average diameter through the center when it has an irregular shape. The average of the diameters of 100 pores may be defined as the average diameter.

The studless winter tire preferably has a rate of reduction in pattern noise from before to after the running conditions indicated below, which is enhanced by 2 to 10% as compared with a studless winter tire including a tread formed from a rubber composition having the same formulation except for containing no water-soluble fine particle. In other words, the rate of reduction in pattern noise, which indicates how much the pattern noise after the running conditions below is reduced compared to the pattern noise before running, is preferably enhanced by 2 to 10% as compared to the rate of reduction in pattern noise of a studless winter tire including a tread formed from a rubber composition having the same formulation except for containing no water-soluble fine particle.

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.
Herein, the pattern noise can be determined as follows. The studless winter tire may be mounted on each wheel of a vehicle (a front-engine, rear-wheel-drive vehicle of 2000 cc displacement made in Japan, rim: 7.5 J × 17, internal pressure: 220 kPa) and run on a road noise measuring road (icy road) at 60 km/h. The noise level inside the vehicle in the driver's window-side ear position during the running may be measured to determine the sound pressure level at a narrow-band peak of cavity resonance noise around 500 Hz.
Among embodiments of the tread rubber composition for studless winter tires of the present invention, the following first to fifth embodiments may be particularly preferred. These embodiments will be described one by one below.

[First embodiment]

The first embodiment of the present invention may include a tread rubber composition for studless winter tires, containing: a rubber component including an isoprene-based rubber and a polybutadiene rubber; a water-soluble fine particle; a resin; and a liquid plasticizer, the resin being present in an amount of 15 to 40 parts by mass, the liquid plasticizer being present in an amount of 30 parts by mass or less, each per 100 parts by mass of the rubber component (hereinafter, also referred to as "the first rubber composition").
The first rubber composition contains a rubber component including an isoprene-based rubber and a polybutadiene rubber (BR), a water-soluble fine particle, a resin, and a liquid plasticizer. Further, the resin is present in a predetermined amount, and the amount of the liquid plasticizer is not more than a predetermined value. Such a rubber composition provides a balanced improvement of performance on ice (at air temperatures of -5 to 0°C) and wet grip performance.
Although unclear, the reason for this effect may be described as follows.
Studless winter tires require grip performance on ice. In order to obtain this performance, it is necessary to increase the rigidity of the inside of the tread while softening the surface of the tread. However, simply attaching a soft tread to a material with increased rigidity may result in their separation at the interface. It is considered that such separation may be effectively avoided by using the same formulation in both the inside and surface of the tread.
Thus, a formulation containing a relatively small amount of a liquid plasticizer and a predetermined amount of a resin is used in both the inside and surface of the tread to increase the rigidity of the entire tread (inside and surface), and further a water-soluble fine particle is used in the tread surface where it may dissolve in water on the road surface so that the tread surface becomes soft. For this reason it is considered that highly improved grip performance on ice and good wet grip performance can be simultaneously provided, and the balance between performance on ice (performance on ice at air temperatures of -5 to 0°C) and wet grip performance can be synergistically improved.
Further, the first rubber composition has the following additional effect: it is also excellent in anti-snow sticking properties and low-temperature cornering performance (cornering performance (handling stability during turning) at air temperatures of 10°C or lower), and the balance between performance on ice (at air temperatures of -5 to 0°C), wet grip performance, anti-snow sticking properties, and low-temperature cornering performance can also be synergistically improved.

(Rubber component)

The first rubber composition contains a rubber component including an isoprene-based rubber and a polybutadiene rubber (BR) .
Examples of the isoprene-based rubber include those mentioned earlier.
In view of wet grip performance and the balance between performance on ice and wet grip performance, the amount of the isoprene-based rubber based on 100% by mass of the rubber component in the first rubber composition is preferably 20% by mass or more, more preferably 30% by mass or more. The upper limit of the amount is not particularly critical but is preferably 80% by mass or less, more preferably 60% by mass or less, still more preferably 50% by mass or less.
Non-limiting examples of the BR include those mentioned earlier.
In view of performance on ice and the balance between performance on ice and wet grip performance, the amount of the BR based on 100% by mass of the rubber component in the first rubber composition is preferably 10% by mass or more, more preferably 20% by mass or more, still more preferably 30% by mass or more, further preferably 50% by mass or more. The upper limit of the amount is not particularly critical but is preferably 90% by mass or less, more preferably 80% by mass or less, still more preferably 70% by mass or less.
The combined amount of the isoprene-based rubber and BR based on 100% by mass of the rubber component

in the first rubber composition is preferably 30% by mass or more, more preferably 60% by mass or more, still more preferably 80% by mass or more, particularly preferably 100% by mass. A higher combined amount tends to lead to better low-temperature properties, thereby providing desired performance on ice.

The rubber component of the first rubber composition may include additional rubbers as mentioned earlier as long as the effects are not impaired.

(Water-soluble fine particle)

Examples of the water-soluble fine particle include those mentioned earlier. In view of the balance between performance on ice and wet grip performance, the water-soluble fine particle preferably has a median particle size (median size, D50) of 1 μm to 1 mm, more preferably 2 μm to 800 μm, still more preferably 2 μm to 500 μm.

The amount of the water-soluble fine particle per 100 parts by mass of the rubber component in the first rubber composition is preferably 5 parts by mass or more, more preferably 15 parts by mass or more, still more preferably 20 parts by mass or more, particularly preferably 25 parts by mass or more. When the amount is not less than the lower limit, good performance on ice tends to be obtained. The amount is also preferably 100 parts by mass or less, more preferably 70 parts by mass or less, still more preferably 50 parts by mass or less, particularly preferably 40 parts by mass or less. When the amount is not more than the upper limit, good rubber physical properties such as wet grip performance tend to be obtained.

(Silica)

In view of the balance of the properties, the first rubber composition preferably contains silica as filler. Examples of the silica include those mentioned earlier.

The amount of the silica per 100 parts by mass of the rubber component in the first rubber composition is preferably 25 parts by mass or more, more preferably 30 parts by mass or more, still more preferably 50 parts by mass or more, further preferably 55 parts by mass or more, particularly preferably 60 parts by mass or more. When the amount is not less than the lower limit, good wet grip performance and good handling stability tend to be obtained. The upper limit of the amount is not particularly critical but is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersibility tends to be obtained.

The silica in the first rubber composition preferably has a nitrogen adsorption specific surface area ($N_2SA$) of 70 $m^2/g$ or more, more preferably 140 $m^2/g$ or more, still more preferably 160 $m^2/g$ or more. When the $N_2SA$ is not less than the lower limit, good wet grip performance and good tensile strength tend to be obtained. The upper limit of the $N_2SA$ of the silica is not particularly critical but is preferably 500 $m^2/g$ or less, more preferably 300 $m^2/g$ or less, still more preferably 250 $m^2/g$ or less. When the $N_2SA$ is not more than the upper limit, good dispersibility tends to be obtained.

In view of the balance between performance on ice and wet grip performance, the amount of the silica in the first rubber composition is preferably 50% by mass or more, more preferably 80% by mass or more, still more preferably 90% by mass or more, based on a total of 100% by mass of silica and carbon black.

(Silane coupling agent)

The first rubber composition containing silica preferably also contains a silane coupling agent. Non-limiting examples of the silane coupling agent include those mentioned earlier.

The amount of the silane coupling agent per 100 parts by mass of the silica in the first rubber composition is preferably 3 parts by mass or more, more preferably 6 parts by mass or more. When the amount is 3 parts by mass or more, good properties such as tensile strength tend to be obtained. The amount is also preferably 20 parts by mass or less, more preferably 15 parts by mass or less. When the amount is 20 parts by mass or less, an effect commensurate with the amount tends to be obtained.

(Carbon black)

In view of the balance of the properties, the first rubber composition preferably contains carbon black as filler. Non-limiting examples of the carbon black include those mentioned earlier.

The amount of the carbon black per 100 parts by mass of the rubber component in the first rubber composition is preferably 1 part by mass or more, more preferably 3 parts by mass or more. When the amount is not less than the lower limit, good properties such as abrasion resistance and performance on ice (grip performance on ice) tend to be obtained. The amount is also preferably 10 parts by mass or less, more preferably 7 parts by mass or less. When the

amount is not more than the upper limit, the rubber composition tends to provide good processability.

The carbon black in the first rubber composition preferably has a nitrogen adsorption specific surface area ($N_2SA$) of 50 $m^2/g$ or more, more preferably 80 $m^2/g$ or more, still more preferably 100 $m^2/g$ or more. When the $N_2SA$ is not less than the lower limit, good abrasion resistance and good grip performance on ice tend to be obtained. The $N_2SA$ is also preferably 200 $m^2/g$ or less, more preferably 150 $m^2/g$ or less, still more preferably 130 $m^2/g$ or less. Carbon black having a $N_2SA$ of not more than the upper limit tends to disperse well.

In view of the balance between performance on ice and wet grip performance, the combined amount of the silica and carbon black per 100 parts by mass of the rubber component in the first rubber composition is preferably 50 to 120 parts by mass, and is more preferably 55 parts by mass or more, still more preferably 60 parts by mass or more. The combined amount is also more preferably 100 parts by mass or less, still more preferably 80 parts by mass or less.

(Liquid plasticizer)

The first rubber composition contains a liquid plasticizer in an amount of 30 parts by mass or less per 100 parts by mass of the rubber component. With such an amount, good rigidity can be provided, and excellent wet grip performance and performance on ice, and further good anti-snow sticking properties and low-temperature cornering performance can be obtained. The amount of the liquid plasticizer is preferably 20 parts by mass or less, more preferably 10 parts by mass or less. The lower limit of the amount is not particularly critical, and no liquid plasticizer may be present. In view of properties such as wet grip performance and low-temperature cornering performance, the lower limit is preferably 5 parts by mass or more, more preferably 7 parts by mass or more.

Non-limiting examples of the liquid plasticizer include those mentioned earlier.

(Resin)

The first rubber composition contains a resin (solid resin: resin that is solid at room temperature (25°C)).

The resin (solid resin) preferably has a softening point of 60°C or higher. With such a resin, the effects of the first rubber composition can be more suitably achieved. The softening point is more preferably 70°C or higher, still more preferably 80°C or higher, particularly preferably 90°C or higher, but is preferably 150°C or lower, more preferably 140°C or lower, still more preferably 130°C or lower.

The softening point of the resin as used herein is determined in accordance with JIS K 6220-1:2001 using a ring and ball softening point measuring apparatus and defined as the temperature at which the ball drops down.

Examples of the resin (solid resin) include those mentioned earlier. In order to more suitably achieve the effects of the first rubber composition, aromatic vinyl polymers, coumarone-indene resins, coumarone resins, indene resins, phenol resins, rosin resins, petroleum resins, and terpene resins are preferred among the examples, with aromatic vinyl polymers, coumarone-indene resins, terpene resins, and rosin resins being more preferred.

In particular, in view of the balance between performance on ice and wet grip performance, the resin is preferably at least one selected from the group consisting of C5 resins, C9 resins, limonene resins, $\alpha$-pinene resins, $\beta$-pinene resins, terpene phenol resins, DCPD resins, styrene resins, $\alpha$-methylstyrene resins, coumarone resins, indene resins, phenol resins, and rosin resins. Moreover, in view of anti-snow sticking properties, the resin is particularly preferably a limonene resin, $\alpha$-pinene resin, $\beta$-pinene resin, terpene phenol resin, or DCPD resin.

The amount of the resin per 100 parts by mass of the rubber component in the first rubber composition is 15 to 40 parts by mass. With such an amount, excellent wet grip performance and performance on ice, and further good anti-snow sticking properties and low-temperature cornering performance can be obtained. The amount is preferably 17 parts by mass or more, more preferably 20 parts by mass or more, but is preferably 35 parts by mass or less, more preferably 30 parts by mass or less.

In view of rigidity, the combined amount of the resin (solid resin) and liquid plasticizer per 100 parts by mass of the rubber component in the first rubber composition is preferably 60 parts by mass or less, more preferably 50 parts by mass or less, still more preferably 40 parts by mass or less. The lower limit of the combined amount is not particularly critical, and no liquid plasticizer may be present. In view of properties such as performance on ice, the lower limit is preferably 15 parts by mass or more, more preferably 17 parts by mass or more.

(Other materials)

The first rubber composition may further contain other materials as mentioned earlier in amounts as indicated earlier.

[Second embodiment]

The second embodiment of the present invention may include a tread rubber composition for studless winter tires, containing: a rubber component including an isoprene-based rubber and a polybutadiene rubber; a water-soluble fine particle; silica; and a liquid plasticizer, the silica being present in an amount of 105 parts by mass or more, the liquid plasticizer being present in an amount of 30 parts by mass or less, each per 100 parts by mass of the rubber component (hereinafter, also referred to as "the second rubber composition").

The second rubber composition contains a rubber component including an isoprene-based rubber and a polybutadiene rubber (BR), a water-soluble fine particle, silica, and a liquid plasticizer. Further, the silica is present in an amount not less than a predetermined value, and the amount of the liquid plasticizer is not more than a predetermined value. Such a rubber composition provides a balanced improvement of performance on ice (at air temperatures of -5 to 0°C) and abrasion resistance.

Although unclear, the reason for this effect may be described as follows.

Studless winter tires require grip performance on ice. In order to obtain this performance, it is necessary to increase the rigidity of the inside of the tread while softening the surface of the tread. However, simply attaching a soft tread to a material with increased rigidity may result in their separation at the interface. It is considered that such separation may be effectively avoided by using the same formulation in both the inside and surface of the tread.

Thus, a formulation containing a relatively small amount of a liquid plasticizer and an increased amount of silica is used in both the inside and surface of the tread to increase the rigidity of the entire tread (inside and surface), and further a water-soluble fine particle is used in the tread surface where it may dissolve in water on the road surface so that the tread surface becomes soft. For this reason it is considered that highly improved grip performance on ice and good abrasion resistance can be simultaneously provided, and the balance between performance on ice (performance on ice at air temperatures of -5 to 0°C) and abrasion resistance can be synergistically improved.

Further, the second rubber composition has the following additional effect: it is also excellent in high-temperature handling stability (handling stability at air temperatures of 20°C or higher), and the balance between performance on ice (at air temperatures of -5 to 0°C), abrasion resistance, and high-temperature handling stability can also be synergistically improved.

(Rubber component)

The second rubber composition contains a rubber component including an isoprene-based rubber and a polybutadiene rubber (BR) .

Examples of the isoprene-based rubber include those mentioned earlier.

In view of abrasion resistance and the balance between performance on ice and abrasion resistance, the amount of the isoprene-based rubber based on 100% by mass of the rubber component in the second rubber composition is preferably 20% by mass or more, more preferably 30% by mass or more. The upper limit of the amount is not particularly critical but is preferably 80% by mass or less, more preferably 60% by mass or less, still more preferably 50% by mass or less.

Non-limiting examples of the BR include those mentioned earlier.

In view of performance on ice and the balance between performance on ice and abrasion resistance, the amount of the BR based on 100% by mass of the rubber component in the second rubber composition is preferably 20% by mass or more, more preferably 30% by mass or more, still more preferably 50% by mass or more. The upper limit of the amount is not particularly critical but is preferably 90% by mass or less, more preferably 80% by mass or less, still more preferably 70% by mass or less.

The combined amount of the isoprene-based rubber and BR based on 100% by mass of the rubber component in the second rubber composition is preferably 30% by mass or more, more preferably 60% by mass or more, still more preferably 80% by mass or more, particularly preferably 100% by mass. A higher combined amount tends to lead to better low-temperature properties, thereby providing desired performance on ice.

The rubber component of the second rubber composition may include additional rubbers as mentioned earlier as long as the effects are not impaired.

(Water-soluble fine particle)

Examples of the water-soluble fine particle include those mentioned earlier. In view of the balance between performance on ice and abrasion resistance, the water-soluble fine particle preferably has a median particle size (median size, D50) of 1 $\mu$m to 1 mm, more preferably 2 $\mu$m to 800 $\mu$m, still more preferably 2 $\mu$m to 500 $\mu$m.

The amount of the water-soluble fine particle per 100 parts by mass of the rubber component in the second rubber composition is preferably 5 parts by mass or more, more preferably 15 parts by mass or more, still more preferably

20 parts by mass or more, particularly preferably 25 parts by mass or more. When the amount is not less than the lower limit, good performance on ice tends to be obtained. The amount is also preferably 100 parts by mass or less, more preferably 70 parts by mass or less, still more preferably 50 parts by mass or less, particularly preferably 40 parts by mass or less. When the amount is not more than the upper limit, good rubber physical properties such as abrasion resistance tend to be obtained.

(Silica)

The second rubber composition contains silica. Examples of the silica include those mentioned earlier.

The amount of the silica per 100 parts by mass of the rubber component in the second rubber composition is 105 parts by mass or more, preferably 110 parts by mass or more, more preferably 120 parts by mass or more. When the amount is not less than the lower limit, good abrasion resistance and good handling stability tend to be obtained. The upper limit of the amount is not particularly critical but is preferably 300 parts by mass or less, more preferably 200 parts by mass or less, still more preferably 170 parts by mass or less. When the amount is not more than the upper limit, good dispersibility tends to be obtained.

The silica in the second rubber composition preferably has a nitrogen adsorption specific surface area ($N_2SA$) of 70 $m^2/g$ or more, more preferably 140 $m^2/g$ or more, still more preferably 160 $m^2/g$ or more. When the $N_2SA$ is not less than the lower limit, good abrasion resistance and good tensile strength tend to be obtained. The upper limit of the $N_2SA$ of the silica is not particularly critical but is preferably 500 $m^2/g$ or less, more preferably 300 $m^2/g$ or less, still more preferably 250 $m^2/g$ or less. When the $N_2SA$ is not more than the upper limit, good dispersibility tends to be obtained.

In view of the balance between performance on ice and abrasion resistance, the amount of the silica in the second rubber composition is preferably 50% by mass or more, more preferably 80% by mass or more, still more preferably 90% by mass or more, based on a total of 100% by mass of silica and carbon black.

(Silane coupling agent)

The second rubber composition containing silica preferably also contains a silane coupling agent. Non-limiting examples of the silane coupling agent include those mentioned earlier.

The amount of the silane coupling agent per 100 parts by mass of the silica in the second rubber composition is preferably 3 parts by mass or more, more preferably 6 parts by mass or more. When the amount is 3 parts by mass or more, good properties such as tensile strength tend to be obtained. The amount is also preferably 12 parts by mass or less, more preferably 10 parts by mass or less. When the amount is 12 parts by mass or less, an effect commensurate with the amount tends to be obtained.

(Carbon black)

In view of the balance of the properties, the second rubber composition preferably contains carbon black as filler. Non-limiting examples of the carbon black include those mentioned earlier.

The amount of the carbon black per 100 parts by mass of the rubber component in the second rubber composition is preferably 1 part by mass or more, more preferably 3 parts by mass or more. When the amount is not less than the lower limit, good properties such as abrasion resistance and performance on ice (grip performance on ice) tend to be obtained. The amount is also preferably 10 parts by mass or less, more preferably 7 parts by mass or less. When the amount is not more than the upper limit, the rubber composition tends to provide good processability.

The carbon black in the second rubber composition preferably has a nitrogen adsorption specific surface area ($N_2SA$) of 50 $m^2/g$ or more, more preferably 80 $m^2/g$ or more, still more preferably 100 $m^2/g$ or more. When the $N_2SA$ is not less than the lower limit, good abrasion resistance and good grip performance on ice tend to be obtained. The $N_2SA$ is also preferably 200 $m^2/g$ or less, more preferably 150 $m^2/g$ or less, still more preferably 130 $m^2/g$ or less. Carbon black having a $N_2SA$ of not more than the upper limit tends to disperse well.

(Liquid plasticizer)

The second rubber composition contains a liquid plasticizer in an amount of 30 parts by mass or less per 100 parts by mass of the rubber component. With such an amount, good rigidity can be provided, and excellent abrasion resistance and performance on ice, and further high-temperature handling stability can be obtained. The amount of the liquid plasticizer is preferably 20 parts by mass or less, more preferably 10 parts by mass or less. The lower limit of the amount is not particularly critical, and no liquid plasticizer may be present. In view of properties such as performance on ice, the lower limit is preferably 5 parts by mass or more, more preferably 7 parts by mass or more.

Non-limiting examples of the liquid plasticizer include those mentioned earlier.

(Resin)

The second rubber composition may contain a resin (solid resin: resin that is solid at room temperature (25°C)).
Examples of the resin (solid resin) include those mentioned earlier, among which aromatic vinyl polymers, coumarone-indene resins, terpene resins, and rosin resins are preferred.
In view of rigidity, the combined amount of the resin (solid resin) and liquid plasticizer per 100 parts by mass of the rubber component in the second rubber composition is preferably 35 parts by mass or less, more preferably 30 parts by mass or less. The lower limit of the combined amount is not particularly critical, and no resin and/or no liquid plasticizer may be present. In view of properties such as performance on ice, the lower limit is preferably 5 parts by mass or more, more preferably 7 parts by mass or more.

(Other materials)

The second rubber composition may further contain other materials as mentioned earlier in amounts as indicated earlier.

[Third embodiment]

The third embodiment of the present invention may include a tread rubber composition for studless winter tires, containing: a rubber component including an isoprene-based rubber and a polybutadiene rubber; a water-soluble fine particle; and a liquid plasticizer, the liquid plasticizer having a glass transition temperature of -50°C or lower and being present in an amount of 30 parts by mass or less per 100 parts by mass of the rubber component (hereinafter, also referred to as "the third rubber composition").
The third rubber composition contains a rubber component including an isoprene-based rubber and a polybutadiene rubber (BR), a water-soluble fine particle, and a liquid plasticizer. Further, the amount of the liquid plasticizer having a predetermined glass transition temperature or lower is not more than a predetermined value. Such a rubber composition provides a balanced improvement of performance on ice (at air temperatures of -5 to 0°C) and abrasion resistance.
Although unclear, the reason for this effect may be described as follows.
Studless winter tires require grip performance on ice. In order to obtain this performance, it is necessary to increase the rigidity of the inside of the tread while softening the surface of the tread. However, simply attaching a soft tread to a material with increased rigidity may result in their separation at the interface. It is considered that such separation may be effectively avoided by using the same formulation in both the inside and surface of the tread.
Thus, a formulation containing a relatively small amount of a liquid plasticizer with a predetermined glass transition temperature or lower is used in both the inside and surface of the tread to increase the rigidity of the entire tread (inside and surface) and also provide flexibility at low temperatures, and further a water-soluble fine particle is used in the tread surface where it may dissolve in water on the road surface so that the tread surface becomes soft. For this reason it is considered that highly improved grip performance on ice and good abrasion resistance can be simultaneously provided, and the balance between performance on ice (performance on ice at air temperatures of -5 to 0°C) and abrasion resistance can be synergistically improved.
Further, the third rubber composition has the following additional effect: it is also excellent in fuel economy and handling stability, and the balance between performance on ice (at air temperatures of -5 to 0°C), abrasion resistance, fuel economy, and handling stability can also be synergistically improved.

(Rubber component)

The third rubber composition contains a rubber component including an isoprene-based rubber and a polybutadiene rubber (BR) .
Examples of the isoprene-based rubber include those mentioned earlier.
In view of abrasion resistance and the balance between performance on ice and abrasion resistance, the amount of the isoprene-based rubber based on 100% by mass of the rubber component in the third rubber composition is preferably 20% by mass or more, more preferably 30% by mass or more. The upper limit of the amount is not particularly critical but is preferably 80% by mass or less, more preferably 60% by mass or less, still more preferably 50% by mass or less.
Non-limiting examples of the BR include those mentioned earlier.
In view of performance on ice and the balance between performance on ice and abrasion resistance, the amount of the BR based on 100% by mass of the rubber component in the third rubber composition is preferably 10% by mass or more, more preferably 20% by mass or more, still more preferably 30% by mass or more, further preferably 50% by

mass or more. The upper limit of the amount is not particularly critical but is preferably 90% by mass or less, more preferably 80% by mass or less, still more preferably 70% by mass or less.

The combined amount of the isoprene-based rubber and BR based on 100% by mass of the rubber component in the third rubber composition is preferably 30% by mass or more, more preferably 60% by mass or more, still more preferably 80% by mass or more, particularly preferably 100% by mass. A higher combined amount tends to lead to better low-temperature properties, thereby providing desired performance on ice.

The rubber component of the third rubber composition may include additional rubbers as mentioned earlier as long as the effects are not impaired.

(Water-soluble fine particle)

Examples of the water-soluble fine particle include those mentioned earlier. In view of the balance between performance on ice and abrasion resistance, the water-soluble fine particle preferably has a median particle size (median size, D50) of 1 $\mu$m to 1 mm, more preferably 2 $\mu$m to 800 $\mu$m, still more preferably 2 $\mu$m to 500 $\mu$m.

The amount of the water-soluble fine particle per 100 parts by mass of the rubber component in the third rubber composition is preferably 5 parts by mass or more, more preferably 15 parts by mass or more, still more preferably 20 parts by mass or more, particularly preferably 25 parts by mass or more. When the amount is not less than the lower limit, good performance on ice tends to be obtained. The amount is also preferably 100 parts by mass or less, more preferably 70 parts by mass or less, still more preferably 50 parts by mass or less, particularly preferably 40 parts by mass or less. When the amount is not more than the upper limit, good rubber physical properties such as abrasion resistance tend to be obtained.

(Silica)

In view of the balance of the properties, the third rubber composition preferably contains silica as filler. Examples of the silica include those mentioned earlier.

The amount of the silica per 100 parts by mass of the rubber component in the third rubber composition is preferably 25 parts by mass or more, more preferably 30 parts by mass or more, still more preferably 50 parts by mass or more, further preferably 55 parts by mass or more, particularly preferably 60 parts by mass or more. When the amount is not less than the lower limit, good abrasion resistance and good handling stability tend to be obtained. The upper limit of the amount is not particularly critical but is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersibility tends to be obtained.

The silica in the third rubber composition preferably has a nitrogen adsorption specific surface area ($N_2SA$) of 70 $m^2/g$ or more, more preferably 140 $m^2/g$ or more, still more preferably 160 $m^2/g$ or more. When the $N_2SA$ is not less than the lower limit, good abrasion resistance and good tensile strength tend to be obtained. The upper limit of the $N_2SA$ of the silica is not particularly critical but is preferably 500 $m^2/g$ or less, more preferably 300 $m^2/g$ or less, still more preferably 250 $m^2/g$ or less. When the $N_2SA$ is not more than the upper limit, good dispersibility tends to be obtained.

In view of the balance between performance on ice and abrasion resistance, the amount of the silica in the third rubber composition is preferably 50% by mass or more, more preferably 80% by mass or more, still more preferably 90% by mass or more, based on a total of 100% by mass of silica and carbon black.

(Silane coupling agent)

The third rubber composition containing silica preferably also contains a silane coupling agent. Non-limiting examples of the silane coupling agent include those mentioned earlier.

The amount of the silane coupling agent per 100 parts by mass of the silica in the third rubber composition is preferably 3 parts by mass or more, more preferably 6 parts by mass or more. When the amount is 3 parts by mass or more, good properties such as tensile strength tend to be obtained. The amount is also preferably 20 parts by mass or less, more preferably 15 parts by mass or less. When the amount is 20 parts by mass or less, an effect commensurate with the amount tends to be obtained.

(Carbon black)

In view of the balance of the properties, the third rubber composition preferably contains carbon black as filler. Non-limiting examples of the carbon black include those mentioned earlier.

The amount of the carbon black per 100 parts by mass of the rubber component in the third rubber composition is preferably 1 part by mass or more, more preferably 3 parts by mass or more. When the amount is not less than the

lower limit, good properties such as abrasion resistance and performance on ice (grip performance on ice) tend to be obtained. The amount is also preferably 10 parts by mass or less, more preferably 7 parts by mass or less. When the amount is not more than the upper limit, the rubber composition tends to provide good processability.

The carbon black in the third rubber composition preferably has a nitrogen adsorption specific surface area ($N_2SA$) of 50 $m^2/g$ or more, more preferably 80 $m^2/g$ or more, still more preferably 100 $m^2/g$ or more. When the $N_2SA$ is not less than the lower limit, good abrasion resistance and good grip performance on ice tend to be obtained. The $N_2SA$ is also preferably 200 $m^2/g$ or less, more preferably 150 $m^2/g$ or less, still more preferably 130 $m^2/g$ or less. Carbon black having a $N_2SA$ of not more than the upper limit tends to disperse well.

In view of the balance between performance on ice and abrasion resistance, the combined amount of the silica and carbon black per 100 parts by mass of the rubber component in the third rubber composition is preferably 50 to 120 parts by mass. The combined amount is more preferably 55 parts by mass or more, still more preferably 60 parts by mass or more, but is more preferably 100 parts by mass or less, still more preferably 80 parts by mass or less.

(Liquid plasticizer)

The third rubber composition contains a liquid plasticizer having a glass transition temperature (Tg) of -50°C or lower in an amount of 30 parts by mass or less per 100 parts by mass of the rubber component. With such an amount of such a liquid plasticizer, good rigidity can be provided, and excellent abrasion resistance and performance on ice, and further good fuel economy and handling stability can be obtained. The amount of the liquid plasticizer is preferably 20 parts by mass or less, more preferably 10 parts by mass or less. The lower limit of the amount is not particularly critical, but in view of properties such as performance on ice, the lower limit is preferably 5 parts by mass or more, more preferably 7 parts by mass or more.

In view of properties such as performance on ice and fuel economy, the glass transition temperature (Tg) of the liquid plasticizer is preferably -55°C or lower. Moreover, the lower limit of the Tg is not particularly critical, but in view of properties such as wet grip performance, it is preferably -90°C or higher, more preferably -85°C or higher.

Herein, the glass transition temperature of the liquid plasticizer is measured at a temperature increase rate of 10°C/min using a differential scanning calorimeter (Q200, TA Instruments Japan) in accordance with JIS K 7121:1987.

The liquid plasticizer may be any plasticizer that is liquid at 20°C and has the predetermined glass transition temperature range. The liquid plasticizer is preferably at least one selected from the group consisting of plant oils and liquid diene polymers. These liquid plasticizers may be used alone, or two or more of these may be used in combination.

Examples of the plant oils include those mentioned earlier. In order to more suitably achieve the effects of the third rubber composition, plant oils such as sunflower oil and rapeseed oil are preferred among the examples.

Examples of the liquid diene polymers include those mentioned earlier. In particular, the liquid diene polymer is preferably at least one selected from the group consisting of liquid polybutadiene polymers, liquid polyisoprene polymers, liquid styrene butadiene copolymers, liquid farnesene polymers, and liquid farnesene butadiene copolymers, all of which are liquid at 20°C. In order to more suitably achieve the effects of the third rubber composition, the liquid diene polymer is more preferably a liquid farnesene polymer, liquid farnesene butadiene copolymer, or liquid polybutadiene polymer each of which is liquid at 20°C, still more preferably a liquid farnesene polymer or liquid farnesene butadiene copolymer each of which is liquid at 20°C, particularly preferably a liquid farnesene butadiene copolymer which is liquid at 20°C.

In order to more suitably achieve the effects of the third rubber composition, the liquid diene polymer preferably has a weight average molecular weight (Mw) of 2000 or more, more preferably 3000 or more, but preferably 100000 or less, more preferably 70000 or less.

Herein, the weight average molecular weight (Mw) is determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The third rubber composition may further contain additional liquid plasticizers as long as the effects are not impaired. Examples of such additional liquid plasticizers include process oils such as paraffinic process oils, aromatic process oils, and naphthenic process oils, and the above-mentioned liquid resins.

(Resin)

The third rubber composition may contain a resin (solid resin: resin that is solid at room temperature (25°C)).

Examples of the resin (solid resin) include those mentioned earlier, among which aromatic vinyl polymers, coumarone-indene resins, terpene resins, and rosin resins are preferred.

In view of rigidity, the combined amount of the resin (solid resin) and liquid plasticizer per 100 parts by mass of the rubber component in the third rubber composition is preferably 35 parts by mass or less, more preferably 30 parts by mass or less. The lower limit of the combined amount is not particularly critical, but in view of properties such as

performance on ice, it is preferably 5 parts by mass or more, more preferably 7 parts by mass or more.

(Other materials)

The third rubber composition may further contain other materials as mentioned earlier in amounts as indicated earlier.

[Fourth embodiment]

The fourth embodiment of the present invention may include a tread rubber composition for studless winter tires, containing: a rubber component including an isoprene-based rubber, a polybutadiene rubber, and a styrene butadiene rubber; a water-soluble fine particle; and a liquid plasticizer, the styrene butadiene rubber being present in an amount of 1 to 10% by mass based on 100% by mass of the rubber component, the liquid plasticizer being present in an amount of 30 parts by mass or less per 100 parts by mass of the rubber component (hereinafter, also referred to as "the fourth rubber composition").

The fourth rubber composition contains a rubber component including an isoprene-based rubber, a polybutadiene rubber (BR), and a styrene butadiene rubber (SBR), a water-soluble fine particle, and a liquid plasticizer. Further, the styrene butadiene rubber is present in a predetermined amount, and the amount of the liquid plasticizer is not more than a predetermined value. Such a rubber composition provides a balanced improvement of performance on ice (at air temperatures of -5 to 0°C) and wet grip performance.

Although unclear, the reason for this effect may be described as follows.

Studless winter tires require grip performance on ice. In order to obtain this performance, it is necessary to increase the rigidity of the inside of the tread while softening the surface of the tread. However, simply attaching a soft tread to a material with increased rigidity may result in their separation at the interface. It is considered that such separation may be effectively avoided by using the same formulation in both the inside and surface of the tread.

Moreover, when a water-soluble fine particle is used not only in the tread surface but also in the entire tread (inside and surface), the tread tends to have inferior tensile strength such as tensile properties or tear resistance because the water-soluble fine particle, unlike silica or the like, forms no bond with rubber.

Hence, a formulation containing a relatively small amount of a liquid plasticizer and a predetermined amount of a styrene butadiene rubber is used in both the inside and surface of the tread to increase the rigidity of the entire tread (inside and surface), and further a water-soluble fine particle is used in the tread surface where it may dissolve in water on the road surface so that the tread surface becomes soft. For this reason it is considered that highly improved grip performance on ice and good wet grip performance can be simultaneously provided, and the balance between performance on ice (performance on ice at air temperatures of -5 to 0°C) and wet grip performance can be synergistically improved.

Further, the fourth rubber composition has the following additional effect: it is also excellent in tensile strength such as tensile properties and tear resistance, and handling stability, and the balance between performance on ice (at air temperatures of -5 to 0°C), wet grip performance, tensile strength, and handling stability can also be synergistically improved.

(Rubber component)

The fourth rubber composition contains a rubber component including an isoprene-based rubber, a polybutadiene rubber (BR), and a styrene butadiene rubber (SBR).

Examples of the isoprene-based rubber include those mentioned earlier.

In view of wet grip performance and the balance between performance on ice and wet grip performance, the amount of the isoprene-based rubber based on 100% by mass of the rubber component in the fourth rubber composition is preferably 20% by mass or more, more preferably 30% by mass or more. The upper limit of the amount is not particularly critical but is preferably 80% by mass or less, more preferably 60% by mass or less, still more preferably 50% by mass or less.

Non-limiting examples of the BR include those mentioned earlier.

In view of performance on ice and the balance between performance on ice and wet grip performance, the amount of the BR based on 100% by mass of the rubber component in the fourth rubber composition is preferably 20% by mass or more, more preferably 30% by mass or more, still more preferably 45% by mass or more. The upper limit of the amount is not particularly critical but is preferably 90% by mass or less, more preferably 80% by mass or less, still more preferably 70% by mass or less.

Any SBR usually used in the tire industry may be used, including emulsion-polymerized SBR (E-SBR) and solution-polymerized SBR (S-SBR). These types of SBR may be used alone, or two or more of these may be used in combination.

Examples of the SBR include SBR products manufactured or sold by Sumitomo Chemical Co., Ltd., JSR Corporation, Asahi Kasei Corporation, and Zeon Corporation.

The SBR may be an unmodified SBR or a modified SBR. Examples of the modified SBR include those to which functional groups as listed for the modified BR are introduced.

The SBR may be an oil extended SBR or non-oil extended SBR. When an oil extended SBR is used, the amount of oil extension of the SBR, i.e. the amount of extender oil in the SBR is preferably 10 to 50 parts by mass per 100 parts by mass of the rubber solids in the SBR in order to more suitably achieve the effects of the fourth rubber composition.

The SBR preferably has a styrene content of 5% by mass or higher, more preferably 10% by mass or higher, still more preferably 15% by mass or higher, but preferably 60% by mass or lower, more preferably 50% by mass or lower, still more preferably 45% by mass or lower, particularly preferably 40% by mass or lower. When the styrene content is within the above-mentioned range, the effects of the fourth rubber composition can be more suitably achieved.

The styrene content of the SBR as used herein is determined by $^1$H-NMR analysis.

In order to more suitably achieve the effects of the fourth rubber composition, the SBR preferably has a vinyl content of 10 mol% or higher, more preferably 15 mol% or higher, still more preferably 20 mol% or higher, but preferably 70 mol% or lower, more preferably 65 mol% or lower, still more preferably 50 mol% or lower.

The vinyl content of the SBR as used herein refers to the vinyl content of the butadiene portion (the quantity of vinyl units in the butadiene structure) determined by $^1$H-NMR analysis .

In order to more suitably achieve the effects of the fourth rubber composition, the SBR preferably has a glass transition temperature (Tg) of -90°C or higher, more preferably -50°C or higher, but preferably 0°C or lower, more preferably -10°C or lower.

Herein, the glass transition temperature is measured at a temperature increase rate of 10°C/min using a differential scanning calorimeter (Q200, TA Instruments Japan) in accordance with JIS K 7121.

In order to more suitably achieve the effects of the fourth rubber composition, the SBR preferably has a weight average molecular weight (Mw) of 200,000 or more, more preferably 250,000 or more, still more preferably 300,000 or more, particularly preferably 1,000,000 or more. The Mw is also preferably 2,000,000 or less, more preferably 1,800,000 or less.

Herein, the weight average molecular weight (Mw) may be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The amount of the SBR based on 100% by mass of the rubber component in the fourth rubber composition is 1 to 10% by mass. In view of performance on ice and the balance between performance on ice and wet grip performance, the amount is preferably 2% by mass or more, more preferably 3% by mass or more, still more preferably 5% by mass or more, but is preferably 9% by mass or less, more preferably 8% by mass or less.

The combined amount of the isoprene-based rubber and BR based on 100% by mass of the rubber component in the fourth rubber composition is preferably 30% by mass or more, more preferably 60% by mass or more, still more preferably 80% by mass or more, further preferably 90% by mass or more, particularly preferably 92% by mass or more. A higher combined amount tends to lead to better low-temperature properties, thereby providing desired performance on ice. For example, the upper limit of the combined amount is preferably 99% by mass or less, more preferably 95% by mass or less.

The rubber component of the fourth rubber composition may include additional rubbers as long as the effects are not impaired. Examples of such additional rubbers include diene rubbers such as acrylonitrile butadiene rubber (NBR), chloroprene rubber (CR), butyl rubber (IIR), and styrene-isoprene-butadiene copolymer rubber (SIBR).

(Water-soluble fine particle)

Examples of the water-soluble fine particle include those mentioned earlier. In view of the balance between performance on ice and wet grip performance, the water-soluble fine particle preferably has a median particle size (median size, D50) of 1 μm to 1 mm, more preferably 2 μm to 800 μm, still more preferably 2 μm to 500 μm.

The amount of the water-soluble fine particle per 100 parts by mass of the rubber component in the fourth rubber composition is preferably 1 part by mass or more, more preferably 5 parts by mass or more, still more preferably 15 parts by mass or more, further preferably 20 parts by mass or more, particularly preferably 25 parts by mass or more. When the amount is not less than the lower limit, good performance on ice tends to be obtained. The amount is also preferably 100 parts by mass or less, more preferably 70 parts by mass or less, still more preferably 50 parts by mass or less, particularly preferably 40 parts by mass or less. When the amount is not more than the upper limit, good rubber physical properties such as tensile strength tend to be obtained.

(Silica)

In view of the balance of the properties, the fourth rubber composition preferably contains silica as filler. Examples of the silica include those mentioned earlier.

The amount of the silica per 100 parts by mass of the rubber component in the fourth rubber composition is preferably 30 parts by mass or more, more preferably 50 parts by mass or more, still more preferably 55 parts by mass or more, further preferably 60 parts by mass or more. When the amount is not less than the lower limit, good wet grip performance and good handling stability tend to be obtained. The upper limit of the amount is not particularly critical but is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersibility tends to be obtained.

The silica in the fourth rubber composition preferably has a nitrogen adsorption specific surface area ($N_2SA$) of 70 $m^2/g$ or more, more preferably 140 $m^2/g$ or more, still more preferably 160 $m^2/g$ or more. When the $N_2SA$ is not less than the lower limit, good wet grip performance and good tensile strength tend to be obtained. Moreover, the upper limit of the $N_2SA$ of the silica is not particularly critical but is preferably 500 $m^2/g$ or less, more preferably 300 $m^2/g$ or less, still more preferably 250 $m^2/g$ or less. When the $N_2SA$ is not more than the upper limit, good dispersibility tends to be obtained.

In view of the balance between performance on ice and wet grip performance, the amount of the silica in the fourth rubber composition is preferably 50% by mass or more, more preferably 80% by mass or more, still more preferably 90% by mass or more, based on a total of 100% by mass of silica and carbon black.

(Silane coupling agent)

The fourth rubber composition containing silica preferably also contains a silane coupling agent. Non-limiting examples of the silane coupling agent include those mentioned earlier.

The amount of the silane coupling agent per 100 parts by mass of the silica in the fourth rubber composition is preferably 3 parts by mass or more, more preferably 6 parts by mass or more. When the amount is 3 parts by mass or more, good properties such as tensile strength tend to be obtained. The amount is also preferably 12 parts by mass or less, more preferably 10 parts by mass or less. When the amount is 12 parts by mass or less, an effect commensurate with the amount tends to be obtained.

(Carbon black)

In view of the balance of the properties, the fourth rubber composition preferably contains carbon black as filler. Non-limiting examples of the carbon black include those mentioned earlier.

The amount of the carbon black per 100 parts by mass of the rubber component in the fourth rubber composition is preferably 1 part by mass or more, more preferably 3 parts by mass or more. When the amount is not less than the lower limit, good properties such as abrasion resistance and performance on ice (grip performance on ice) tend to be obtained. The amount is also preferably 10 parts by mass or less, more preferably 7 parts by mass or less. When the amount is not more than the upper limit, the rubber composition tends to provide good processability.

The carbon black in the fourth rubber composition preferably has a nitrogen adsorption specific surface area ($N_2SA$) of 50 $m^2/g$ or more, more preferably 80 $m^2/g$ or more, still more preferably 100 $m^2/g$ or more. When the $N_2SA$ is not less than the lower limit, good abrasion resistance and good grip performance on ice tend to be obtained. The $N_2SA$ is also preferably 200 $m^2/g$ or less, more preferably 150 $m^2/g$ or less, still more preferably 130 $m^2/g$ or less. Carbon black having a $N_2SA$ of not more than the upper limit tends to disperse well.

(Liquid plasticizer)

The fourth rubber composition contains a liquid plasticizer in an amount of 30 parts by mass or less per 100 parts by mass of the rubber component. With such an amount, good rigidity can be provided, and excellent wet grip performance and performance on ice, and further good tensile strength and handling stability can be obtained. The amount of the liquid plasticizer is preferably 20 parts by mass or less, more preferably 10 parts by mass or less. The lower limit of the amount is not particularly critical, and no liquid plasticizer may be present. In view of processability, the lower limit is preferably 5 parts by mass or more, more preferably 7 parts by mass or more.

Non-limiting examples of the liquid plasticizer include those mentioned earlier.

(Resin)

The fourth rubber composition may contain a resin (solid resin: resin that is solid at room temperature (25°C)).

Examples of the resin (solid resin) include those mentioned earlier, among which aromatic vinyl polymers, coumarone-indene resins, terpene resins, and rosin resins are preferred.

In view of rigidity, the combined amount of the resin (solid resin) and liquid plasticizer per 100 parts by mass of the rubber component in the fourth rubber composition is preferably 35 parts by mass or less, more preferably 30 parts by mass or less. The lower limit of the combined amount is not particularly critical, and no resin and/or no liquid plasticizer may be present. In view of properties such as grip performance on ice, the lower limit is preferably 5 parts by mass or more, more preferably 7 parts by mass or more.

(Other materials)

The fourth rubber composition may further contain other materials as mentioned earlier in amounts as indicated earlier.

[Fifth embodiment]

The fifth embodiment of the present invention may include a tread rubber composition for studless winter tires, containing: a rubber component including an isoprene-based rubber and a modified conjugated diene polymer; a water-soluble fine particle; silica; and a liquid plasticizer, the silica being present in an amount of 30 parts by mass or more, the liquid plasticizer being present in an amount of 30 parts by mass or less, each per 100 parts by mass of the rubber component (hereinafter, also referred to as "the fifth rubber composition").

The fifth rubber composition contains a rubber component including an isoprene-based rubber and a modified conjugated diene polymer, a water-soluble fine particle, silica, and a liquid plasticizer. Further, the silica is present in an amount not less than a predetermined value, and the amount of the liquid plasticizer is not more than a predetermined value. Such a rubber composition provides a balanced improvement of performance on ice (at air temperatures of -5 to 0°C), abrasion resistance, fuel economy, and high-temperature handling stability (handling stability at air temperatures of 20°C or higher).

Although unclear, the reason for this effect may be described as follows.

Studless winter tires require grip performance on ice. In order to obtain this performance, it is necessary to use a highly flexible rubber such as foamed rubber. However, if flexibility is simply increased by forming pores in rubber, block rigidity cannot be maintained, resulting in reduced handling stability, and further abrasion resistance can be greatly reduced. Therefore, in order to simultaneously achieve these properties, it is necessary to increase the rigidity of the inside of the tread while softening the surface of the tread. However, simply attaching a soft tread to a material with increased rigidity may result in their separation at the interface. It is considered that such separation may be effectively avoided by using the same formulation in both the inside and surface of the tread.

Hence, a formulation containing a relatively small amount of a liquid plasticizer and a modified conjugated diene polymer for improving silica dispersion is used in both the inside and surface of the tread to increase the rigidity of the entire tread (inside and surface), and further a water-soluble fine particle is used in the tread surface where it may dissolve in water on the road surface so that the tread surface becomes soft. For this reason it is considered that highly improved grip performance on ice and good abrasion resistance can be simultaneously provided, and further good fuel economy and good high-temperature handling stability can be obtained, and therefore the balance between performance on ice (performance on ice at air temperatures of -5 to 0°C), abrasion resistance, fuel economy, and high-temperature handling stability can be synergistically improved.

(Rubber component)

The fifth rubber composition contains a rubber component including an isoprene-based rubber and a modified conjugated diene polymer.

Examples of the isoprene-based rubber include those mentioned earlier.

In view of abrasion resistance and the balance between performance on ice and abrasion resistance, the amount of the isoprene-based rubber based on 100% by mass of the rubber component in the fifth rubber composition is preferably 20% by mass or more, more preferably 30% by mass or more. The upper limit of the amount is not particularly critical but is preferably 80% by mass or less, more preferably 60% by mass or less, still more preferably 50% by mass or less.

The modified conjugated diene polymer to be incorporated in the fifth rubber composition may be any polymer obtained by modifying the backbone and/or chain end of a conjugated diene polymer. Examples include those described

below. These modified conjugated diene polymers may be used alone, or two or more of these may be used in combination.

Examples of the conjugated diene polymer include those mentioned earlier. A particularly preferred embodiment of the fifth rubber composition contains a modified polybutadiene rubber as the modified conjugated diene polymer.

The modified conjugated diene polymer preferably has a cis content (cis-1,4 bond content) of 80% by mass or higher, more preferably 85% by mass or higher, still more preferably 90% by mass or higher, particularly preferably 95% by mass or higher, most preferably 97% by mass or higher. With such a modified conjugated diene polymer, better performance on ice can be obtained.

The modified conjugated diene polymer may be a combination of at least one modified conjugated diene polymer having a cis content of 80% by mass or higher, more preferably 85% by mass or higher, still more preferably 90% by mass or higher, particularly preferably 95% by mass or higher, most preferably 97% by mass or higher and at least one modified conjugated diene polymer having a cis content of 50% by mass or lower, more preferably 40% by mass or lower, still more preferably 30% by mass or lower. Thus, another suitable embodiment of the fifth rubber composition includes a combination of a high cis content modified conjugated diene polymer and a low cis content modified conjugated diene polymer.

The modified conjugated diene polymer is preferably produced by a method that includes: modification step (A) of performing a modification reaction to introduce an alkoxysilane compound having two or more reactive groups, including an alkoxysilyl group, into the active terminal of a conjugated diene polymer having an active terminal; and condensation step (B) of performing a condensation reaction of the residual group of the alkoxysilane compound introduced into the active terminal, in the presence of a condensation catalyst containing at least one element selected from the group consisting of the elements of Groups 4, 12, 13, 14, and 15 of the periodic table, wherein the conjugated diene polymer is produced by polymerization in the presence of a catalyst composition mainly containing a mixture of the following components (a) to (c):

component (a): a lanthanoid-containing compound which contains at least one element selected from the group consisting of lanthanoids, or a reaction product obtained by reaction between the lanthanoid-containing compound and a Lewis base;
component (b): at least one compound selected from the group consisting of aluminoxanes and organoaluminum compounds represented by the formula (1) : $AlR^aR^bR^c$ wherein $R^a$ and $R^b$ are the same or different and each represent a C1-C10 hydrocarbon group or a hydrogen atom, and $R^c$ is the same as or different from $R^a$ or $R^b$ and represents a C1-C10 hydrocarbon group; and
component (c): an iodine-containing compound which contains at least one iodine atom in its molecular structure.

In other words, a modified conjugated diene polymer (modified conjugated diene polymer (I)) may be produced by performing a modification reaction to introduce an alkoxysilane compound into the active terminal of a conjugated diene polymer having an active terminal (conjugated diene polymer (I)), and then performing a condensation reaction of the residual group of the alkoxysilane compound introduced into the active terminal, in the presence of a condensation catalyst containing at least one of the elements of Groups 4, 12, 13, 14, and 15 of the periodic table.

When the modified conjugated diene polymer is one produced by this method, better performance on ice, abrasion resistance, fuel economy, and high-temperature handling stability can be obtained.

The modification step (A) includes performing a modification reaction to introduce an alkoxysilane compound having two or more reactive groups, including an alkoxysilyl group, into the active terminal of a conjugated diene polymer having an active terminal (conjugated diene polymer (I)).

The conjugated diene polymer (I) may be, for example, a polymer having a repeating unit derived from at least one monomer selected from the group consisting of 1,3-butadiene, isoprene, 2,3-dimethyl-1,3-butadiene, 1,3-pentadiene, 1,3-hexadiene, and myrcene. In particular, it may suitably be a polymer having a repeating unit derived from at least one monomer selected from the group consisting of 1,3-butadiene, isoprene, and 2,3-dimethyl-1,3-butadiene. Thus, in another suitable embodiment of the fifth rubber composition, the modified conjugated diene polymer (I) is formed from at least one conjugated diene compound selected from the group consisting of 1,3-butadiene, isoprene, and 2,3-dimethyl-1,3-butadiene.

Such a conjugated diene polymer (I) may be produced by polymerization in the presence or absence of a solvent. The solvent (polymerization solvent) used in the polymerization may be an inert organic solvent. Specific examples include C4-C10 saturated aliphatic hydrocarbons such as butane, pentane, hexane, and heptane; C6-C20 saturated alicyclic hydrocarbons such as cyclopentane and cyclohexane; monoolefins such as 1-butene and 2- butene; aromatic hydrocarbons such as benzene, toluene, and xylene; and halogenated hydrocarbons such as methylene chloride, chloroform, carbon tetrachloride, trichloroethylene, perchloroethylene, 1,2-dichloroethane, chlorobenzene, bromobenzene, and chlorotoluene.

The polymerization temperature in the production of the conjugated diene polymer (I) is preferably -30 to 200°C, more preferably 0 to 150°C. The polymerization reaction may be carried out in any manner, such as using a batch reactor

or continuously using, for example, a multistage continuous reactor. The polymerization solvent, if used, preferably has a monomer concentration of 5 to 50% by mass, more preferably 7 to 35% by mass. Moreover, in view of efficiency in the production of the conjugated diene polymer and in order to prevent deactivation of the conjugated diene polymer having an active terminal, the polymerization system preferably contains as small an amount as possible of deactivating compounds such as oxygen, water, and carbon dioxide gas.

The conjugated diene polymer (I) may be one produced by polymerization in the presence of a catalyst composition (hereinafter, also referred to as "catalyst") mainly containing a mixture of the following components (a) to (c):

component (a): a lanthanoid-containing compound which contains at least one element selected from the group consisting of lanthanoids, or a reaction product obtained by reaction between the lanthanoid-containing compound and a Lewis base;

component (b): at least one compound selected from the group consisting of aluminoxanes and organoaluminum compounds represented by the formula (1) : $AlR^aR^bR^c$ wherein $R^a$ and $R^b$ are the same or different and each represent a C1-C10 hydrocarbon group or a hydrogen atom, and $R^c$ is the same as or different from $R^a$ or $R^b$ and represents a C1-C10 hydrocarbon group; and

component (c): an iodine-containing compound which contains at least one iodine atom in its molecular structure.

The use of such a catalyst enables production of a conjugated diene polymer having a cis content of 94% by mass or higher. Moreover, such a catalyst is useful for industrial production because it does not require polymerization at very low temperatures and is easy to handle.

The component (a) is a lanthanoid-containing compound which contains at least one element selected from the group consisting of lanthanoids, or a reaction product obtained by reaction between the lanthanoid-containing compound and a Lewis base. Preferred among the lanthanoids are neodymium, praseodymium, cerium, lanthanum, gadolinium, and samarium, with neodymium being particularly preferred. These lanthanoids may be used alone, or two or more of these may be used in combination. Specific examples of the lanthanoid-containing compound include lanthanoid carboxylates, alkoxides, β-diketone complexes, phosphates, and phosphites. Preferred among these are carboxylates or phosphates, with carboxylates being more preferred.

Specific examples of the lanthanoid carboxylates include carboxylates represented by the formula (2) : $(R^d\text{-}COO)_3M$ wherein M represents a lanthanoid, and each $R^d$ is the same or different and represents a C1-C20 hydrocarbon group. $R^d$ in formula (2) is preferably a saturated or unsaturated alkyl group and preferably a linear, branched, or cyclic alkyl group. The carboxyl group is bound to a primary, secondary, or tertiary carbon atom. Specific examples include salts of octanoic acid, 2-ethylhexanoic acid, oleic acid, stearic acid, benzoic acid, naphthenic acid, and trade name "versatic acid" (available from Shell Chemicals, a carboxylic acid whose carboxyl group is bound to a tertiary carbon atom). Preferred among these are salts of versatic acid, 2-ethylhexanoic acid, and naphthenic acid.

Specific examples of the lanthanoid alkoxides include those represented by the formula (3): $(R^eO)_3M$ wherein M represents a lanthanoid. Specific examples of the alkoxy group represented by "$R^eO$" in formula (3) include 2-ethylhexylalkoxy, oleylalkoxy, stearylalkoxy, phenoxy, and benzylalkoxy groups. Preferred among these are 2-ethyl-hexylalkoxy and benzylalkoxy groups.

Specific examples of the lanthanoid β-diketone complexes include acetylacetone complexes, benzoylacetone complexes, propionitrileacetone complexes, valerylacetone complexes, and ethylacetylacetone complexes. Preferred among these are acetylacetone complexes and ethylacetylacetone complexes.

Specific examples of the lanthanoid phosphates or phosphites include bis(2-ethylhexyl) phosphate, bis(1-methylheptyl) phosphate, bis(p-nonylphenyl) phosphate, bis(polyethyleneglycol-p-nonylphenyl) phosphate, (1-methylheptyl)(2-ethylhexyl) phosphate, (2-ethylhexyl)(p-nonylphenyl) phosphate, mono-2-ethylhexyl (2-ethylhexyl)phosphonate, mono-p-nonylphenyl (2-ethylhexyl)phosphonate, bis(2-ethylhexyl)phosphinic acid, bis(1-methylheptyl)phosphinic acid, bis(p-nonylphenyl)phosphinic acid, (1-methylheptyl)(2-ethylhexyl)phosphinic acid, and (2-ethylhexyl)(p-nonylphenyl)phosphinic acid salts. Preferred among these are bis(2-ethylhexyl) phosphate, bis(1-methylheptyl) phosphate, mono-2-ethylhexyl (2-ethylhexyl)phosphonate, and bis(2-ethylhexyl)phosphinic acid salts.

Among the above-mentioned lanthanoid-containing compounds, neodymium phosphates or neodymium carboxylates are particularly preferred, with neodymium versatate or neodymium 2-ethyl-hexanoate being most preferred.

In order to solubilize the lanthanoid-containing compound in a solvent or stably store the compound for a long period of time, it is also preferred to mix the lanthanoid-containing compound with a Lewis base, or react the lanthanoid-containing compound with a Lewis base to give a reaction product. The amount of the Lewis base per mol of the lanthanoid is preferably 0 to 30 mol, more preferably 1 to 10 mol. Specific examples of the Lewis base include acetylacetone, tetrahydrofuran, pyridine, N,N-dimethylformamide, thiophene, diphenyl ether, triethylamine, organophosphorus compounds, and monohydric or dihydric alcohols. The above-mentioned components (a) may be used alone, or two or more of these may be used in combination.

The component (b) is at least one compound selected from the group consisting of aluminoxanes and organoaluminum compounds represented by the formula (1): $AlR^aR^bR^c$ wherein $R^a$ and $R^b$ are the same or different and each represent a C1-C10 hydrocarbon group or a hydrogen atom, and $R^c$ is the same as or different from $R^a$ or $R^b$ and represents a C1-C10 hydrocarbon group.

The term "aluminoxane" (hereinafter, also referred to as "alumoxane") refers to a compound having a structure represented by the following formula (4) or (5), and may include alumoxane association complexes as disclosed in Fine Chemical, 23, (9), 5 (1994), J. Am. Chem. Soc., 115, 4971 (1993), and J. Am. Chem. Soc., 117, 6465 (1995).

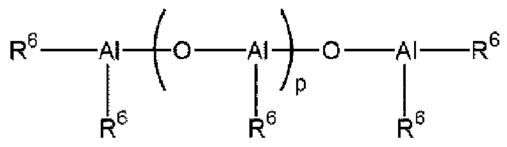
(4)

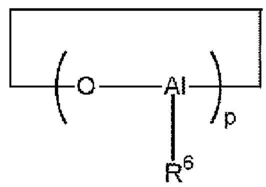
(5)

In formulas (4) and (5), each $R^6$ is the same or different and represents a C1-C20 hydrocarbon group, and p represents an integer of 2 or larger.

Specific examples of $R^6$ include methyl, ethyl, propyl, butyl, isobutyl, t-butyl, hexyl, isohexyl, octyl, and isooctyl groups. Preferred among these are methyl, ethyl, isobutyl, and t-butyl groups, with a methyl group being particularly preferred.

The symbol p is preferably an integer of 4 to 100.

Specific examples of the alumoxanes include methylalumoxane (hereinafter, also referred to as "MAO"), ethylalumoxane, n-propylalumoxane, n-butylalumoxane, isobutylalumoxane, t-butylalumoxane, hexylalumoxane, and isohexylalumoxane. Preferred among these is MAO. The alumoxanes may be produced by known methods, such as, for example, by adding a trialkylaluminum or dialkylaluminum monochloride to an organic solvent such as benzene, toluene, or xylene, and then adding water, steam, steam-containing nitrogen gas, or a salt having water of crystallization such as copper sulfate pentahydrate or aluminum sulfate hexadecahydrate to react them. These alumoxanes may be used alone, or two or more of these may be used in combination.

Specific examples of the organoaluminum compounds of formula (1) include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum, diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride, ethylaluminum dihydride, n-propylaluminum dihydride, and isobutylaluminum dihydride. Preferred among these are diisobutylaluminum hydride, triethylaluminum, triisobutylaluminum, and diethylaluminum hydride, with diisobutylaluminum hydride being particularly preferred. These organoaluminum compounds may be used alone, or two or more of these may be used in combination.

The component (c) is an iodine-containing compound which contains at least one iodine atom in its molecular structure. The use of such an iodine-containing compound facilitates production of a conjugated diene polymer having a cis content of 94% by mass or higher. The iodine-containing compound may be any compound that contains at least one iodine atom in its molecular structure, and examples include iodine, trimethylsilyl iodide, diethylaluminum iodide, methyl iodide, butyl iodide, hexyl iodide, octyl iodide, iodoform, diiodomethane, benzylidene iodide, beryllium iodide, magnesium iodide, calcium iodide, barium iodide, zinc iodide, cadmium iodide, mercury iodide, manganese iodide, rhenium iodide, copper iodide, silver iodide, and gold iodide.

In particular, the iodine-containing compound is preferably a silicon iodide compound represented by the formula (6) : $R^7{}_qSiI_{4-q}$ wherein each $R^7$ is the same or different and represents a C1-C20 hydrocarbon group or a hydrogen atom, and q represents an integer of 0 to 3; a hydrocarbon iodide compound represented by the formula (7) : $R^8{}_rI_{4-r}$ wherein each $R^8$ is the same or different and represents a C1-C20 hydrocarbon group, and r represents an integer of 1 to 3; or iodine. Such silicon iodide compounds, hydrocarbon iodide compounds, and iodine are well soluble in organic solvents, and thus are easy to handle and useful for industrial production. Thus, in another suitable embodiment of the fifth rubber composition, the component (c) is at least one iodine-containing compound selected from the group consisting of the silicon iodide compounds, hydrocarbon iodide compounds, and iodine.

Specific examples of the silicon iodide compounds (compounds of formula (6)) include trimethylsilyl iodide, triethylsilyl iodide, and dimethylsilyl diiodo. Preferred among these is trimethylsilyl iodide.

Specific examples of the hydrocarbon iodide compounds (compounds of formula (7)) include methyl iodide, butyl iodide, hexyl iodide, octyl iodide, iodoform, diiodomethane, and benzylidene iodide. Preferred among these are methyl iodide, iodoform, and diiodomethane.

Among these iodine-containing compounds, iodine, trimethylsilyl iodide, triethylsilyl iodide, dimethylsilyl diiodo, methyl iodide, iodoform, and diiodomethane are particularly preferred, with trimethylsilyl iodide being most preferred. These iodine-containing compounds may be used alone, or two or more of these may be used in combination.

The mixing ratio of the components (components (a) to (c)) may be appropriately selected as needed. For example, the amount of the component (a) per 100 g of the conjugated diene compound is preferably 0.00001 to 1.0 mmol, more preferably 0.0001 to 0.5 mmol. When the amount is less than 0.00001 mmol, polymerization activity may decrease. When the amount is more than 1.0 mmol, the catalyst concentration may be so high that a demineralization step can be required.

The amount of the alumoxane, if used as the component (b), may be defined as the molar ratio of the component (a) to the aluminum (Al) contained in the alumoxane. The molar ratio of "component (a)" to "aluminum (Al) contained in alumoxane" is preferably 1:1 to 1:500, more preferably 1:3 to 1:250, still more preferably 1:5 to 1:200. When the amount of the alumoxane is outside the above-mentioned range, the catalytic activity may decrease, or a step of removing catalyst residues may be required.

The amount of the organoaluminum compound, if used as the component (b), may be defined as the molar ratio of the component (a) to the organoaluminum compound. The molar ratio of "component (a)" to "organoaluminum compound" is preferably 1:1 to 1:700, more preferably 1:3 to 1:500. When the amount of the organoaluminum compound is outside the above-mentioned range, the catalytic activity may decrease, or a step of removing catalyst residues may be required.

The amount of the component (c) may be defined as the molar ratio of the iodine atom contained in the component (c) to the component (a). The molar ratio of "iodine atom contained in component (c)" to "component (a)" is preferably 0.5 to 3.0, more preferably 1.0 to 2.5, still more preferably 1.2 to 2.0. When the molar ratio of "iodine atom contained in component (c)" to "component (a)" is less than 0.5, the polymerization catalytic activity may decrease. When the molar ratio of "iodine atom contained in component (c)" to "component (a)" is more than 3.0, catalyst poisoning may occur.

In addition to the components (a) to (c), the catalyst preferably contains at least one compound selected from the group consisting of conjugated diene compounds and non-conjugated diene compounds, if necessary, in an amount of 1000 mol or less, more preferably 3 to 1000 mol, still more preferably 5 to 300 mol per mol of the component (a). The catalyst containing at least one compound selected from the group consisting of conjugated diene compounds and non-conjugated diene compounds has much improved catalytic activity and is thus preferred. Examples of the conjugated diene compounds that can be used include 1,3-butadiene and isoprene, which may also be used as monomers for polymerization as described later. Examples of the non-conjugated diene compounds include divinylbenzene, diisopropenylbenzene, triisopropenylbenzene, 1,4-vinylhexadiene, and ethylidene norbornene.

The catalyst composition mainly containing a mixture of components (a) to (c) may be prepared, for example, by reacting the components (a) to (c) dissolved in a solvent, and optionally at least one compound selected from the group consisting of conjugated diene compounds and non-conjugated diene compounds. The components may be added in any order in the preparation. However, in order to improve polymerization activity and reduce induction period for initiation of polymerization, it is preferred that the components be previously mixed, reacted, and aged. The aging temperature is preferably 0 to 100°C, more preferably 20 to 80°C. Aging at lower than 0°C tends to be insufficient, while aging at higher than 100°C tends to result in reduced catalytic activity and wider molecular weight distribution. The aging time is not particularly critical. Moreover, the components may be brought into contact with each other in a production line before being added to a polymerization reaction vessel. In this case, an aging time of at least 0.5 minutes is sufficient. The prepared catalyst will be stable for several days.

The conjugated diene polymer (I) to be used to prepare the modified conjugated diene polymer (I) preferably has a ratio of the weight average molecular weight (Mw) to the number average molecular weight (Mn) measured by gel permeation chromatography, i.e., a molecular weight distribution (Mw/Mn), of 3.5 or less, more preferably 3.0 or less, still more preferably 2.5 or less. A molecular weight distribution of more than 3.5 tends to lead to decreases in rubber physical properties, including tensile properties and low heat build-up properties. Moreover, the lower limit of the molecular weight distribution is not particularly critical.

Herein, the molecular weight distribution (Mw/Mn) refers to a value calculated as the ratio of weight average molecular weight to number average molecular weight (weight average molecular weight/number average molecular weight).

The weight average molecular weight of the conjugated diene polymer is measured by gel permeation chromatography (GPC) calibrated with polystyrene standards.

The number average molecular weight of the conjugated diene polymer is measured by GPC calibrated with polystyrene standards.

The vinyl content and cis content of the conjugated diene polymer (I) may be easily controlled by adjusting the polymerization temperature. The Mw/Mn may be easily controlled by adjusting the molar ratio of the components (a) to (c).

The conjugated diene polymer (I) also preferably has a Mooney viscosity at 100°C ($ML_{1+4}$, 100°C) within a range of 5 to 50, more preferably 10 to 40. A Mooney viscosity of less than 5 may lead to decreases in properties such as mechanical properties after vulcanization and abrasion resistance, while a Mooney viscosity of more than 50 may lead to reduced processability during the kneading of the modified conjugated diene polymer after the modification reaction. The Mooney viscosity may be easily controlled by adjusting the molar ratio of the components (a) to (c).

The Mooney viscosity ($ML_{1+4}$, 100°C) is measured as described later in EXAMPLES.

The conjugated diene polymer (I) also preferably has a 1,2-vinyl bond content (1,2-vinyl content, vinyl content) of 0.5% by mass or lower, more preferably 0.4% by mass or lower, still more preferably 0.3% by mass or lower. A 1,2-vinyl bond content of higher than 0.5% by mass tends to lead to decreases in rubber physical properties such as tensile properties. The 1,2-vinyl bond content of the conjugated diene polymer (I) is also preferably 0.001% by mass or higher, more preferably 0.01% by mass or higher.

Herein, the 1,2-vinyl bond content is calculated from signal intensities measured by NMR analysis.

The alkoxysilane compound used in the modification step (A) (hereinafter, also referred to as "modifier") has two or more reactive groups, including an alkoxysilyl group. The type of reactive group other than the alkoxysilyl group is not particularly limited and is preferably, for example, at least one functional group selected from the group consisting of (f) an epoxy group, (g) an isocyanate group, (h) a carbonyl group, and (i) a cyano group. Thus, in another suitable embodiment of the fifth rubber composition, the alkoxysilane compound contains at least one functional group selected from the group consisting of (f) an epoxy group, (g) an isocyanate group, (h) a carbonyl group, and (i) a cyano group. The alkoxysilane compound may be in the form of a partial condensate or a mixture of the alkoxysilane compound and the partial condensate.

The term "partial condensate" refers to an alkoxysilane compound in which some (i.e. not all) of SiOR (wherein OR represents an alkoxy group) groups are joined by condensation to form SiOSi bonds. The conjugated diene polymer to be used in the modification reaction preferably has at least 10% living polymer chains.

Specific suitable examples of the alkoxysilane compound that contains (f) an epoxy group (hereinafter, also referred to as "epoxy group-containing alkoxysilane compound") include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. More preferred among these is 3-glycidoxypropyltrimethoxysilane or 2-(3,4-epoxycyclohexyl)ethyltrimethoxysilane.

Moreover, examples of the alkoxysilane compound that contains (g) an isocyanate group (hereinafter, also referred to as "isocyanate group-containing alkoxysilane compound") include 3-isocyanatopropyltrimethoxysilane, 3-isocyanatopropyltriethoxysilane, 3-isocyanatopropylmethyldiethoxysilane, and 3-isocyanatopropyltriisopropoxysilane. Particularly preferred among these is 3-isocyanatopropyltrimethoxysilane.

Moreover, examples of the alkoxysilane compound that contains (h) a carbonyl group (hereinafter, also referred to as "carbonyl group-containing alkoxysilane compound") include 3-methacryloyloxypropyltriethoxysilane, 3-methacryloyloxypropyltrimethoxysilane, 3-methacryloyloxypropylmethyldiethoxysilane, and 3-methacryloyloxypropyltriisopropoxysilane. Particularly preferred among these is 3-methacryloyloxypropyltrimethoxysilane.

Furthermore, examples of the alkoxysilane compound that contains (i) a cyano group (hereinafter, also referred to as "cyano group-containing alkoxysilane compound") include 3-cyanopropyltriethoxysilane, 3-cyanopropyltrimethoxysilane, 3-cyanopropylmethyldiethoxysilane, and 3-cyanopropyltriisopropoxysilane. Particularly preferred among these is 3-cyanopropyltrimethoxysilane.

Among these modifiers, 3-glycidoxypropyltrimethoxysilane, 2-(3,4-epoxycyclohexyl)ethyltrimethoxysilane, 3-isocyanatopropyltrimethoxysilane, 3-methacryloyloxypropyltrimethoxysilane, and 3-cyanopropyltrimethoxysilane are particularly preferred, with 3-glycidoxypropyltrimethoxysilane being most preferred.

These modifiers may be used alone, or two or more of these may be used in combination. Partial condensates of the alkoxysilane compounds may also be used.

The amount of the alkoxysilane compound used in the modification reaction in the modification step (A) is preferably 0.01 to 200 mol, more preferably 0.1 to 150 mol per mol of the component (a). An amount of less than 0.01 mol may not allow the modification reaction to proceed sufficiently to improve dispersibility of fillers sufficiently, while an amount that exceeds 200 mol may add unnecessary cost as the modification reaction may then already be saturated. The modifier may be added in any manner, such as all at once, in portions, or continuously. Preferably, it is added all at once.

The modification reaction is preferably performed in a solution. The solution used in the polymerization which contains unreacted monomers may be directly used as this solution. Moreover, the modification reaction may be carried out in any manner, such as using a batch reactor or continuously using a multistage continuous reactor, inline mixer, or other devices. Moreover, the modification reaction is preferably performed after the polymerization reaction but before

solvent removal, water treatment, heat treatment, the procedures necessary for polymer separation, and other operations.

The temperature of the modification reaction may be the same as the polymerization temperature during the polymerization of the conjugated diene polymer. Specifically, it is preferably 20 to 100°C, more preferably 30 to 90°C. A temperature lower than 20°C tends to result in an increase in the viscosity of the polymer. A temperature higher than 100°C may deactivate the polymerization active terminal.

The reaction time in the modification reaction is preferably five minutes to five hours, more preferably 15 minutes to one hour. In the condensation step (B), after the introduction of the alkoxysilane compound residue into the active terminal of the polymer, known antioxidants or reaction terminators may be added if necessary.

In the modification step (A), it is preferred to add, in addition to the modifier, an agent which can be consumed by a condensation reaction with the alkoxysilane compound residue, i.e. the modifier introduced into the active terminal, in the condensation step (B). Specifically, it is preferred to add a functional group-introducing agent. The use of a functional group-introducing agent improves the abrasion resistance of the modified conjugated diene polymer.

The functional group-introducing agent may be any compound that substantially does not directly react with the active terminal but remains unreacted in the reaction system. For example, the functional group-introducing agent is preferably an alkoxysilane compound that is different from the alkoxysilane compound used as the modifier, i.e., an alkoxysilane compound that contains at least one functional group selected from the group consisting of (j) an amino group, (k) an imino group, and (1) a mercapto group. The alkoxysilane compound used as the functional group-introducing agent may be in the form of a partial condensate or a mixture of the partial condensate and an alkoxysilane compound that can be used as a functional group-introducing agent but is not a partial condensate.

Specific examples of the functional group-introducing agent that is an alkoxysilane compound containing (j) an amino group (hereinafter, also referred to as "amino group-containing alkoxysilane compound") include 3-dimethylaminopropyl (triethoxy)silane, 3-dimethylaminopropyl (trimethoxy)silane, 3-diethylaminopropyl(triethoxy)silane, 3-diethylaminopropyl(trimethoxy)silane, 2-dimethylaminoethyl (triethoxy)silane, 2-dimethylaminoethyl(trimethoxy)silane, 3-dimethylaminopropyl(diethoxy)methylsilane, 3-dibutylaminopropyl(triethoxy)silane, 3-aminopropyltrimethoxysilane, 3-aminopropyltriethoxysilane, aminophenyltrimethoxysilane, aminophenyltriethoxysilane, 3-(N-methylamino)propyltrimethoxysilane, 3-(N-methylamino)propyltriethoxysilane, 3-(1-pyrrolidinyl)propyl(triethoxy)silane, and 3-(1-pyrrolidinyl)propyl(trimethoxy)silane; N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, and N-(cyclohexylidene)-3-(triethoxysilyl)-1-propaneamine, and trimethoxysilyl, methyldiethoxysilyl, ethyldiethoxysilyl, methyldimethoxysilyl, or ethyldimethoxysilyl compounds corresponding to the foregoing triethoxysilyl compounds. Particularly preferred among these are 3-diethylaminopropyl(triethoxy)silane, 3-dimethylaminopropyl (triethoxy)silane, 3-aminopropyltriethoxysilane, N-(1-methylpropylidene)-3-(triethoxysilyl)-1-propaneamine, and N-(1,3-dimethylbutylidene)-3-(triethoxysilyl)-1-propaneamine.

Moreover, suitable examples of the alkoxysilane compound containing (k) an imino group (hereinafter, also referred to as "imino group-containing alkoxysilane compound") include 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane, and 3-(1-hexamethyleneimino)propyl(diethoxy)ethylsilane; and 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline, N-(3-isopropoxysilylpropyl)-4,5-dihydroimidazole, and N-(3-methyldiethoxysilylpropyl)-4,5-dihydroimidazole. More preferred among these are 3-(1-hexamethyleneimino)propyl(triethoxy)silane, 3-(1-hexamethyleneimino)propyl(trimethoxy)silane, (1-hexamethyleneimino)methyl(trimethoxy)silane, 1-[3-(triethoxysilyl)propyl]-4,5-dihydroimidazole, and 1-[3-(trimethoxysilyl)propyl]-4,5-dihydroimidazole.

Moreover, examples of the alkoxysilane compound containing (1) a mercapto group (hereinafter, also referred to as "mercapto group-containing alkoxysilane compound") include 3-mercaptopropyltriethoxysilane, 3-mercaptopropyltrimethoxysilane, 2-mercaptoethyltriethoxysilane, 2-mercaptoethyltrimethoxysilane, 3-mercaptopropyl(diethoxy)methylsilane, 3-mercaptopropyl(monoethoxy)dimethylsilane, mercaptophenyltrimethoxysilane, and mercaptophenyltriethoxysilane. Particularly preferred among these is 3-mercaptopropyltriethoxysilane.

Among these functional group-introducing agents, 3-diethylaminopropyl(triethoxy)silane, 3-dimethylaminopropyl(triethoxy)silane, 3-aminopropyltriethoxysilane, 3-(1-hexamethyleneimino)propyl(triethoxy)silane, N-(1-methylpropylidene)-3-(triethoxysilyl)-1-propaneamine, N-(1,3-dimethylbutylidene)-3-(triethoxysilyl)-1-propaneamine, 3-(1-hexamethyleneimino)propyl(trimethoxy)silane, (1-hexamethyleneimino)methyl(trimethoxy)silane, 1-[3-(triethoxysilyl)propyl]-4,5-dihydroimidazole, 1-[3-(trimethoxysilyl)propyl]-4,5-dihydroimidazole, and 3-mercaptopropyltriethoxysilane are particularly preferred, with 3-aminopropyltriethoxysilane being most preferred.

These functional group-introducing agents may be used alone, or two or more of these may be used in combination.

The amount of the alkoxysilane compound, if used as the functional group-introducing agent, per mol of the component (a) is preferably 0.01 to 200 mol, more preferably 0.1 to 150 mol. An amount of less than 0.01 mol may not allow the condensation reaction to proceed sufficiently to improve dispersibility of fillers sufficiently, while an amount that exceeds 200 mol may add unnecessary cost as the condensation reaction may then already be saturated.

The functional group-introducing agent is preferably added after the introduction of the alkoxysilane compound residue into the active terminal of the conjugated diene polymer (I) in the modification step (A) but before the start of the condensation reaction in the condensation step (B). If added after the start of the condensation reaction, the functional group-introducing agent may not uniformly disperse, resulting in reduced catalytic performance. Specifically, the functional group-introducing agent is preferably added five minutes to five hours after the start of the modification reaction, more preferably 15 minutes to one hour after the start of the modification reaction.

When the functional group-containing alkoxysilane compound is used as the functional group-introducing agent, a modification reaction occurs between the conjugated diene polymer (I) having an active terminal and a substantially stoichiometric amount of the modifier added to the reaction system to introduce the alkoxysilyl group into substantially all active terminals, and further the functional group-introducing agent is added so that the alkoxysilane compound residues are introduced in an amount more than the equivalent amount of the active terminal of the conjugated diene polymer.

In view of reaction efficiency, the condensation reaction between alkoxysilyl groups preferably occurs between a free alkoxysilane compound and the alkoxysilyl group present at the end of the conjugated diene polymer, or optionally between the alkoxysilyl groups at the ends of the conjugated diene polymers. It is not preferred to react free alkoxysilane compounds . Thus, when an alkoxysilane compound is further added as a functional group-introducing agent, its alkoxysilyl group preferably has lower hydrolyzability than the alkoxysilyl group introduced into the end of the conjugated diene polymer.

For example, it is preferred to combine a compound containing a trimethoxysilyl group with high hydrolyzability as the alkoxysilane compound to be reacted with the active terminal of the conjugated diene polymer (I) with a compound containing an alkoxysilyl group (e.g. a triethoxysilyl group) with lower hydrolyzability than the trimethoxysilyl group-containing compound as the alkoxysilane compound to be further added as a functional group-introducing agent. In contrast, for example, when a compound containing a triethoxysilyl group is used as the alkoxysilane compound to be reacted with the active terminal of the conjugated diene polymer (I), and a compound containing a trimethoxysilyl group is used as the alkoxysilane compound to be further added as a functional group-introducing agent, reaction efficiency may be reduced.

The condensation step (B) includes performing a condensation reaction of the residual group of the alkoxysilane compound introduced into the active terminal, in the presence of a condensation catalyst containing at least one element selected from the group consisting of the elements of Groups 4, 12, 13, 14, and 15 of the periodic table.

The condensation catalyst may be any condensation catalyst that contains at least one element selected from the group consisting of the elements of Groups 4, 12, 13, 14, and 15 of the periodic table. Preferably, for example, the condensation catalyst contains at least one element selected from the group consisting of titanium (Ti) (Group 4), tin (Sn) (Group 14), zirconium (Zr) (Group 4), bismuth (Bi) (Group 15), and aluminum (Al) (Group 13).

Specific examples of the condensation catalyst that contains tin (Sn) include bis(n-octanoate)tin, bis(2-ethylhexanoate)tin, bis(laurate)tin, bis(naphthenate)tin, bis(stearate)tin, bis(oleate)tin, dibutyltin diacetate, dibutyltin di-n-octanoate, dibutyltin di-2-ethylhexanoate, dibutyltin dilaurate, dibutyltin maleate, dibutyltin bis(benzylmaleate), dibutyltin bis(2-ethylhexylmaleate), di-n-octyltin diacetate, di-n-octyltin di-n-octanoate, di-n-octyltin di-2-ethylhexanoate, di-n-octyltin dilaurate, di-n-octyltin maleate, di-n-octyltin bis(benzylmaleate), and di-n-octyltin bis(2-ethylhexylmaleate) .

Examples of the condensation catalyst that contains zirconium (Zr) include tetraethoxyzirconium, tetra-n-propoxyzirconium, tetra-i-propoxyzirconium, tetra-n-butoxyzirconium, tetra-sec-butoxyzirconium, tetra-tert-butoxyzirconium, tetra(2-ethylhexyl oxide)zirconium, zirconium tributoxystearate, zirconium tributoxyacetylacetonate, zirconium dibutoxy bis(acetylacetonate), zirconium tributoxyethylacetoacetate, zirconium butoxyacetylacetonate bis(ethylacetoacetate), zirconium tetrakis(acetylacetonate), zirconium diacetylacetonate bis(ethylacetoacetate), bis(2-ethylhexanoate)zirconium oxide, bis(laurate)zirconium oxide, bis(naphthenate)zirconium oxide, bis(stearate)zirconium oxide, bis(oleate)zirconium oxide, bis(linoleate)zirconium oxide, tetrakis(2-ethylhexanoate) zirconium, tetrakis(laurate)zirconium, tetrakis(naphthenate)zirconium, tetrakis(stearate)zirconium, tetrakis(oleate)zirconium, and tetrakis(linoleate)zirconium.

Examples of the condensation catalyst that contains bismuth (Bi) include tris(2-ethylhexanoate)bismuth, tris(laurate)bismuth, tris(naphthenate)bismuth, tris(stearate)bismuth, tris(oleate)bismuth, and tris(linoleate)bismuth.

Examples of the condensation catalyst that contains aluminum (Al) include triethoxyaluminum, tri-n-propoxyaluminum, tri-i-propoxyaluminum, tri-n-butoxyaluminum, tri-sec-butoxyaluminum, tri-tert-butoxyaluminum, tri(2-ethylhexyl oxide)aluminum, aluminum dibutoxystearate, aluminum dibutoxyacetylacetonate, aluminum butoxy bis(acetylacetonate), aluminum dibutoxyethylacetoacetate, aluminum tris(acetylacetonate), aluminum tris(ethylacetoacetate), tris(2-ethylhexanoate)aluminum, tris(laurate)aluminum, tris(naphthenate)aluminum, tris(stearate)aluminum, tris(oleate)aluminum, and tris(linoleate)aluminum.

Examples of the condensation catalyst that contains titanium (Ti) include tetramethoxytitanium, tetraethoxytitanium, tetra-n-propoxytitanium, tetra-i-propoxytitanium, tetra-n-butoxytitanium, tetra-n-butoxytitanium oligomer, tetra-sec-butoxytitanium, tetra-tert-butoxytitanium, tetra (2-ethylhexyl oxide) titanium, bis(octane dioleate)bis(2-ethylhexyl oxide)titanium, tetra(octane dioleate)titanium, titanium lactate, titanium dipropoxy bis(triethanolaminate), titanium dibutoxy bis(triethanolaminate), titanium tributoxystearate, titanium tripropoxystearate, titanium tripropoxyacetylacetonate, titanium dipropoxy bis(acetylacetonate), titanium tripropoxyethylacetoacetate, titanium propoxyacetylacetonate bis(ethylacetoacetate), titanium tributoxyacetylacetonate, titanium dibutoxy bis(acetylacetonate), titanium tributoxyethylacetoacetate, titanium butoxyacetylacetonate bis(ethylacetoacetate), titanium tetrakis(acetylacetonate), titanium diacetylacetonate bis(ethylacetoacetate), bis(2-ethylhexanoate)titanium oxide, bis(laurate)titanium oxide, bis(naphthenate)titanium oxide, bis(stearate)titanium oxide, bis(oleate)titanium oxide, bis(linoleate)titanium oxide, tetrakis(2-ethylhexanoate)titanium, tetrakis(laurate)titanium, tetrakis(naphthenate)titanium, tetrakis(stearate)titanium, tetrakis(oleate)titanium, and tetrakis(linoleate)titanium.

Among these condensation catalysts, titanium (Ti)-containing condensation catalysts are more preferred. Among the titanium (Ti)-containing condensation catalysts, alkoxides, carboxylates, and acetylacetonate complex salts of titanium (Ti) are still more preferred, with tetra-i-propoxytitanium (tetraisopropyl titanate) being particularly preferred. The use of a titanium (Ti)-containing condensation catalyst more effectively promotes the condensation reaction between the residue of the alkoxysilane compound used as a modifier and the residue of the alkoxysilane compound used as a functional group-introducing agent. Thus, in another suitable embodiment of the fifth rubber composition, the condensation catalyst contains titanium (Ti).

As to the amount of the condensation catalyst, the number of moles of the above-mentioned compounds that may be used as the condensation catalyst is preferably 0.1 to 10 mol, particularly preferably 0.3 to 5 mol per mol of the total alkoxysilyl groups in the reaction system. An amount of less than 0.1 mol may not allow the condensation reaction to sufficiently proceed, while an amount that exceeds 10 mol may add unnecessary cost as the effect of the condensation catalyst may then already be saturated.

The condensation catalyst may be added before the modification reaction, but is preferably added after the modification reaction but before the start of the condensation reaction. If added before the modification reaction, the condensation catalyst may directly react with the active terminal so that no alkoxysilyl group can be introduced into the active terminal. Also, if added after the start of the condensation reaction, the condensation catalyst may not uniformly disperse, resulting in reduced catalytic performance. Specifically, the condensation catalyst is preferably added five minutes to five hours after the start of the modification reaction, more preferably 15 minutes to one hour after the start of the modification reaction.

The condensation reaction in the condensation step (B) is preferably performed in an aqueous solution. The temperature during the condensation reaction is preferably 85 to 180°C, more preferably 100 to 170°C, particularly preferably 110 to 150°C. A condensation reaction temperature of lower than 85°C may not allow the condensation reaction to proceed sufficiently to complete the condensation reaction. In this case, the resulting modified conjugated diene polymer (I) may undergo changes over time to cause a quality problem. Moreover, a temperature of higher than 180°C may cause an aging reaction of the polymer, resulting in decreases in physical properties.

The condensation reaction is preferably performed in an aqueous solution with a pH of 9 to 14, more preferably 10 to 12. When the aqueous solution has a pH in the above-mentioned range, the condensation reaction can be promoted to improve the temporal stability of the modified conjugated diene polymer (I) . A pH of lower than 9 may not allow the condensation reaction to proceed sufficiently to complete the condensation reaction. In this case, the resulting modified conjugated diene polymer (I) may undergo changes over time to cause a quality problem. Moreover, when the condensation reaction is performed in an aqueous solution with a pH higher than 14, the separated modified conjugated diene polymer may contain a large amount of alkali-derived residues which may be difficult to remove.

The reaction time in the condensation reaction is preferably five minutes to 10 hours, more preferably about 15 minutes to five hours . A reaction time of less than five minutes may not complete the condensation reaction, while a reaction time exceeding 10 hours may result in the condensation reaction being already saturated. Moreover, the pressure in the reaction system during the condensation reaction is preferably 0.01 to 20 MPa, more preferably 0.05 to 10 MPa.

The condensation reaction may be carried out in any manner, such as using a batch reactor or continuously using a multistage continuous reactor or other devices. Moreover, solvent removal may be performed simultaneously with the condensation reaction.

After the condensation reaction is performed as described above, a conventional post treatment may be performed to obtain a target modified conjugated diene polymer.

The modified conjugated diene polymer (I) preferably has a Mooney viscosity ($ML_{1+4}$, 125°C) of 10 to 150, more preferably 20 to 100. A Mooney viscosity ($ML_{1+4}$, 125°C) of less than 10 may lead to decreases in rubber physical properties, including tensile properties, while a Mooney viscosity ($ML_{1+4}$, 125°C) of more than 150 may provide poor workability, resulting in difficulty in kneading with compounding agents.

The Mooney viscosity ($ML_{1+4}$, 125°C) is measured as described later in EXAMPLES.

Moreover, the modified conjugated diene polymer (I) preferably has a molecular weight distribution (Mw/Mn) of 3.5 or less, more preferably 3.0 or less, still more preferably 2.5 or less. A molecular weight distribution of more than 3.5 tends to lead to decreases in rubber physical properties such as tensile properties and low heat build-up properties.

The weight average molecular weight (Mw) of the modified conjugated diene polymer is measured by gel permeation chromatography (GPC) calibrated with polystyrene standards.

The number average molecular weight (Mn) of the modified conjugated diene polymer is also measured by GPC calibrated with polystyrene standards.

Moreover, the modified conjugated diene polymer (I) preferably has a cold flow value (mg/min) of 1.0 or lower, more preferably 0.8 or lower. A polymer having a cold flow value of higher than 1.0 may have deteriorated shape stability during storage.

Herein, the cold flow value (mg/min) is determined as described later.

Furthermore, the modified conjugated diene polymer (I) preferably has a temporal stability rating of 0 to 5, more preferably 0 to 2. A polymer having a rating of more than 5 may change over time during storage.

Herein, the temporal stability is determined as described later.

Moreover, the modified conjugated diene polymer (I) preferably has a glass transition temperature of -40°C or lower, more preferably -43°C or lower, still more preferably -46°C or lower, particularly preferably -50°C or lower. When the glass transition temperature is higher than -40°C, the low-temperature properties necessary for studless winter tires may not be sufficiently ensured. Moreover, the lower limit of the glass transition temperature is not particularly critical.

The glass transition temperature of the modified conjugated diene polymer may be measured as described later in EXAMPLES.

Moreover, the modified conjugated diene polymer may be a conjugated diene polymer having a functional group interactive with a filler such as silica (modified conjugated diene polymer (II)). For example, it may be a chain end-modified conjugated diene polymer obtained by modifying at least one chain end of a conjugated diene polymer with a compound (modifier) having the functional group (i.e. a chain end-modified conjugated diene polymer terminated with the functional group); a backbone-modified conjugated diene polymer having the functional group in the backbone; a backbone- and chain end-modified conjugated diene polymer having the functional group in both the backbone and chain end (e.g., a backbone- and chain end-modified conjugated diene polymer in which the backbone has the functional group and at least one chain end is modified with the modifier); or a chain end-modified conjugated diene polymer that has been modified (coupled) with a polyfunctional compound having two or more epoxy groups in the molecule so that a hydroxyl or epoxy group is introduced.

The conjugated diene polymer may be a polymer having a repeating unit derived from at least one monomer selected from the group consisting of 1,3-butadiene, isoprene, 2,3-dimethyl-1,3-butadiene, 1,3-pentadiene, 1,3-hexadiene, and myrcene. In particular, it may suitably be a polymer having a repeating unit derived from at least one monomer selected from the group consisting of 1,3-butadiene, isoprene, and 2,3-dimethyl-1,3-butadiene. Thus, in another suitable embodiment of the fifth rubber composition, the modified conjugated diene polymer (II) is formed from at least one conjugated diene compound selected from the group consisting of 1,3-butadiene, isoprene, and 2,3-dimethyl-1,3-butadiene.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

The modified conjugated diene polymer (II) may suitably be, for example, a conjugated diene polymer modified with a compound (modifier) represented by the following formula:

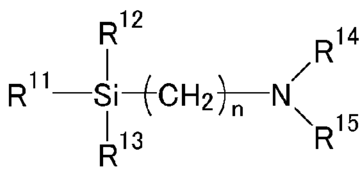

wherein $R^{11}$, $R^{12}$, and $R^{13}$ are the same or different and each represent an alkyl, alkoxy, silyloxy, acetal, carboxyl (-COOH), or mercapto (-SH) group or a derivative thereof; $R^{14}$ and $R^{15}$ are the same or different and each represent a hydrogen atom or an alkyl group, and $R^{14}$ and $R^{15}$ may be joined together to form a ring structure with the nitrogen atom; and n represents an integer.

In particular, the modified conjugated diene polymer modified with a compound (modifier) of the above formula

may suitably be, for example, a solution-polymerized polybutadiene rubber (BR) having a polymerizing end (active terminal) modified with a compound of the above formula.

$R^{11}$, $R^{12}$, and $R^{13}$ may each suitably be an alkoxy group, preferably a C1-C8, more preferably C1-C4, alkoxy group. $R^{14}$ and $R^{15}$ may each suitably be an alkyl group, preferably a C1-C3 alkyl group. The symbol n is preferably 1 to 5, more preferably 2 to 4, still more preferably 3. When $R^{14}$ and $R^{15}$ are joined together to form a ring structure with the nitrogen atom, the ring structure is preferably a 4- to 8-membered ring. The term "alkoxy group" encompasses cycloalkoxy groups (e.g. cyclohexyloxy group) and aryloxy groups (e.g. phenoxy and benzyloxy groups).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane. These modifiers may be used alone, or two or more of these may be used in combination.

The modified conjugated diene polymer (II) may also suitably be a modified conjugated diene polymer that has been modified with any of the following compounds (modifiers), including: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1, 4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and

N,N-bis(2,3-epoxypropoxy)-aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. In particular, it is preferably a modified BR modified with an alkoxysilane.

The modification with the compound (modifier) may be carried out by known methods.

The modified conjugated diene polymer (II) preferably has a 1,2-vinyl bond content (1,2-vinyl content, vinyl content) of 35% by mass or lower, more preferably 30% by mass or lower. A 1,2-vinyl bond content of higher than 35% by mass may lead to reduced fuel economy. Moreover, the lower limit of the 1,2-vinyl bond content is not particularly critical but is preferably 1% by mass or higher, more preferably 20% by mass or higher. A 1,2-vinyl bond content of lower than 1% by mass may lead to decreases in heat resistance and resistance to degradation.

The modified conjugated diene polymer (II) preferably has a weight average molecular weight (Mw) of 100, 000 or more, more preferably 400, 000 or more. When the Mw is less than 100, 000, sufficient tensile strength or flex fatigue resistance may not be obtained. The Mw is also preferably 2, 000, 000 or less, more preferably 800, 000 or less. When the Mw is more than 2, 000, 000, processability may decrease so that dispersion failure can occur, and sufficient tensile strength may not be obtained.

The modified conjugated diene polymer may also be a tin-modified conjugated diene polymer (modified conjugated diene polymer (III)).

The conjugated diene polymer may be, for example, a polymer having a repeating unit derived from at least one monomer selected from the group consisting of 1,3-butadiene, isoprene, 2,3-dimethyl-1,3-butadiene, 1,3-pentadiene, 1,3-hexadiene, and myrcene. In particular, it may suitably be a polymer having a repeating unit derived from at least one monomer selected from the group consisting of 1,3-butadiene, isoprene, and 2,3-dimethyl-1,3-butadiene. Thus, in another suitable embodiment of the fifth rubber composition, the modified conjugated diene polymer (III) is formed from at least one conjugated diene compound selected from the group consisting of 1,3-butadiene, isoprene, and 2,3-dimethyl-1,3-butadiene.

The modified conjugated diene polymer (III) is preferably, but not limited to, a tin-modified polybutadiene rubber (BR) produced by polymerization using an lithium initiator, and which has a tin atom content of 50 to 3000 ppm, a vinyl content of 5 to 50% by mass, and a molecular weight distribution of 2 or less.

The tin-modified BR is preferably one prepared by polymerizing 1,3-butadiene using a lithium initiator and then adding a tin compound, and which has a tin-carbon bond at the molecular end.

Examples of the lithium initiator include lithium compounds such as alkyllithiums and aryllithiums.

Examples of the tin compound include tin tetrachloride and butyltin trichloride.

The tin-modified BR preferably has a tin atom content of 50 ppm or higher. A tin atom content of lower than 50 ppm tends to lead to a higher tan δ. The tin atom content is also preferably 3000 ppm or lower, more preferably 300 ppm or lower. When the tin atom content is higher than 3000 ppm, the kneaded mixture tends to have deteriorated processability.

The modified conjugated diene polymer (III) preferably has a molecular weight distribution (Mw/Mn) of 2 or less. A Mw/Mn of more than 2 tends to lead to a higher tan δ. The lower limit of the molecular weight distribution is not particularly critical but is preferably 1 or more.

The modified conjugated diene polymer (III) preferably has a vinyl content of 5% by mass or higher. A tin-modified BR having a vinyl content of lower than 5% by mass is difficult to produce. The vinyl content is also preferably 50% by mass or lower, more preferably 20% by mass or lower. When the vinyl content is higher than 50% by mass, silica tends to poorly disperse, resulting in decreases in fuel economy, tensile strength at break, and elongation at break.

In view of performance on ice and the balance between performance on ice and abrasion resistance, the amount of the modified conjugated diene polymer based on 100% by mass of the rubber component in the fifth rubber composition is preferably 20% by mass or more, more preferably 30% by mass or more, still more preferably 50% by mass or more. Moreover, the upper limit of the amount is not particularly critical but is preferably 90% by mass or less, more preferably 80% by mass or less, still more preferably 70% by mass or less, particularly preferably 60% by mass or less.

The combined amount of the isoprene-based rubber and modified conjugated diene polymer based on 100% by mass of the rubber component in the fifth rubber composition is preferably 30% by mass or more, more preferably 60% by mass or more, still more preferably 80% by mass or more, particularly preferably 100% by mass. A higher combined amount tends to lead to better low-temperature properties, thereby providing desired performance on ice.

The rubber component of the fifth rubber composition may include additional rubbers as long as the effects are not impaired. Examples of such additional rubbers include diene rubbers which are not included in the above-defined modified conjugated diene polymers, such as unmodified polybutadiene rubber (BR), styrene butadiene rubber (SBR), acrylonitrile butadiene rubber (NBR), chloroprene rubber (CR), butyl rubber (IIR), and styrene-isoprene-butadiene copolymer rubber (SIBR) .

In particular, it may contain an unmodified BR, among others. Thus, in another suitable embodiment of the fifth rubber composition, the rubber component includes an unmodified BR in addition to the isoprene-based rubber and modified conjugated diene polymer.

The unmodified BR may be any BR that is not modified, including those usually used in the tire industry such as high-cis BR, BR containing 1,2-syndiotactic polybutadiene crystals (SPB-containing BR), and polybutadiene rubber synthesized using rare earth catalysts (rare earth-catalyzed BR). Commercial products of such unmodified BR include products from Ube Industries, Ltd., JSR Corporation, Asahi Kasei Corporation, and Zeon Corporation. These types of unmodified BR may be used alone, or two or more of these may be used in combination.

The unmodified BR preferably has a cis content of 80% by mass or higher, more preferably 85% by mass or higher, still more preferably 90% by mass or higher, particularly preferably 95% by mass or higher. With such an unmodified BR, better performance on ice can be obtained.

(Water-soluble fine particle)

Examples of the water-soluble fine particle include those mentioned earlier. In view of the balance between performance on ice and abrasion resistance, the water-soluble fine particle preferably has a median particle size (median size, D50) of 1 μm to 1 mm, more preferably 2 μm to 800 μm, still more preferably 2 μm to 500 μm.

The amount of the water-soluble fine particle per 100 parts by mass of the rubber component in the fifth rubber

composition is preferably 1 part by mass or more, more preferably 5 parts by mass or more, still more preferably 15 parts by mass or more, further preferably 20 parts by mass or more, particularly preferably 25 parts by mass or more. When the amount is not less than the lower limit, good performance on ice tends to be obtained. The amount is also preferably 100 parts by mass or less, more preferably 70 parts by mass or less, still more preferably 50 parts by mass or less, particularly preferably 40 parts by mass or less. When the amount is not more than the upper limit, good rubber physical properties such as abrasion resistance tend to be obtained.

(Silica)

The fifth rubber composition contains silica. Examples of the silica include those mentioned earlier.

The amount of the silica per 100 parts by mass of the rubber component in the fifth rubber composition is 30 parts by mass or more, preferably 50 parts by mass or more, more preferably 55 parts by mass or more, still more preferably 60 parts by mass or more. When the amount is not less than the lower limit, good abrasion resistance and good handling stability tend to be obtained. The upper limit of the amount is not particularly critical but is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersibility tends to be obtained.

The silica in the fifth rubber composition preferably has a nitrogen adsorption specific surface area ($N_2SA$) of 70 $m^2/g$ or more, more preferably 140 $m^2/g$ or more, still more preferably 160 $m^2/g$ or more. When the $N_2SA$ is not less than the lower limit, good abrasion resistance and good tensile strength tend to be obtained. Moreover, the upper limit of the $N_2SA$ of the silica is not particularly critical but is preferably 500 $m^2/g$ or less, more preferably 300 $m^2/g$ or less, still more preferably 250 $m^2/g$ or less. When the $N_2SA$ is not more than the upper limit, good dispersibility tends to be obtained.

In view of the balance between performance on ice and abrasion resistance, the amount of the silica in the fifth rubber composition is preferably 50% by mass or more, more preferably 80% by mass or more, still more preferably 90% by mass or more, based on a total of 100% by mass of silica and carbon black.

(Silane coupling agent)

The fifth rubber composition containing silica preferably also contains a silane coupling agent. Non-limiting examples of the silane coupling agent include those mentioned earlier.

The amount of the silane coupling agent per 100 parts by mass of the silica in the fifth rubber composition is preferably 3 parts by mass or more, more preferably 6 parts by mass or more. When the amount is 3 parts by mass or more, good properties such as tensile strength tend to be obtained. The amount is also preferably 12 parts by mass or less, more preferably 10 parts by mass or less. When the amount is 12 parts by mass or less, an effect commensurate with the amount tends to be obtained.

(Carbon black)

In view of the balance of the properties, the fifth rubber composition preferably contains carbon black as filler. Non-limiting examples of the carbon black include those mentioned earlier.

The amount of the carbon black per 100 parts by mass of the rubber component in the fifth rubber composition is preferably 1 part by mass or more, more preferably 3 parts by mass or more. When the amount is not less than the lower limit, good properties such as abrasion resistance and performance on ice (grip performance on ice) tend to be obtained. The amount is also preferably 10 parts by mass or less, more preferably 7 parts by mass or less. When the amount is not more than the upper limit, the rubber composition tends to provide good processability.

The carbon black in the fifth rubber composition preferably has a nitrogen adsorption specific surface area ($N_2SA$) of 50 $m^2/g$ or more, more preferably 80 $m^2/g$ or more, still more preferably 100 $m^2/g$ or more. When the $N_2SA$ is not less than the lower limit, good abrasion resistance and good grip performance on ice tend to be obtained. The $N_2SA$ is also preferably 200 $m^2/g$ or less, more preferably 150 $m^2/g$ or less, still more preferably 130 $m^2/g$ or less. Carbon black having a $N_2SA$ of not more than the upper limit tends to disperse well.

(Liquid plasticizer)

The fifth rubber composition contains a liquid plasticizer in an amount of 30 parts by mass or less per 100 parts by mass of the rubber component. With such an amount, good rigidity can be provided, and excellent abrasion resistance and performance on ice, and further fuel economy and high-temperature handling stability can be obtained. The amount of the liquid plasticizer is preferably 20 parts by mass or less, more preferably 10 parts by mass or less. The lower limit

of the amount is not particularly critical, and no liquid plasticizer may be present. In view of properties such as performance on ice, the lower limit is preferably 5 parts by mass or more, more preferably 7 parts by mass or more.

Non-limiting examples of the liquid plasticizer include those mentioned earlier.

(Resin)

The fifth rubber composition may contain a resin (solid resin: resin that is solid at room temperature (25°C)).

Examples of the resin (solid resin) include those mentioned earlier, among which aromatic vinyl polymers, coumarone-indene resins, terpene resins, and rosin resins are preferred.

In view of rigidity, the combined amount of the resin (solid resin) and liquid plasticizer per 100 parts by mass of the rubber component in the fifth rubber composition is preferably 35 parts by mass or less, more preferably 30 parts by mass or less. The lower limit of the combined amount is not particularly critical, and no resin and/or no liquid plasticizer may be present. In view of properties such as performance on ice, the lower limit is preferably 5 parts by mass or more, more preferably 7 parts by mass or more.

(Other materials)

The fifth rubber composition may further contain other materials as mentioned earlier in amounts as indicated earlier.

EXAMPLES

The present invention will be specifically described with reference to, but not limited to, examples.

The chemicals used in examples and comparative examples are listed below.

Natural rubber (NR): RSS#3
Polybutadiene rubber (BR): BR150B available from Ube Industries, Ltd. (cis content: 95% by mass or higher)
Carbon black: Seast N220 available from Mitsubishi Chemical Corporation
Silica: Ultrasil VN3 available from Evonik Degussa ($N_2SA$: 172 $m^2/g$)
Silane coupling agent: Si266 available from Evonik Degussa
Water-soluble fine particle 1: MN-00 available from Umai Chemical Co., Ltd. (magnesium sulfate, median particle size (median size): 75 μm)
Water-soluble fine particle 2: USN-00 available from Umai Chemical Co., Ltd. (extremely fine particle magnesium sulfate, median particle size (median size): 3 μm)
Water-soluble fine particle 3: sodium lignin sulfonate available from Tokyo Chemical Industry Co., Ltd. (median particle size (median size): 100 μm)
Wax: Ozoace wax available from Nippon Seiro Co., Ltd.
Antioxidant: NOCRAC 6C available from Ouchi Shinko Chemical Industrial Co., Ltd.
Oil: PS-32 (mineral oil) available from Idemitsu Kosan Co., Ltd.
Resin: YS resin SX100 available from Yasuhara Chemical Co., Ltd. (styrene copolymer resin)
Stearic acid: TSUBAKI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

[Measurement of median particle size (median size) of water-soluble fine particle]

The median particle size of the water-soluble fine particles was measured by laser diffraction using SALD-2000J available from Shimadzu Corporation (the following measurement procedure was used).

<Measurement procedure>

Each water-soluble fine particle was dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples (Ex.) and Comparative Examples (Comp. Ex.)>

Using the recipes shown in Tables 1 and 2, a 1.7 L Banbury mixer was charged with the natural rubber and silica, and with the polybutadiene rubber and silica, and they were kneaded at 150°C for three minutes to give a kneaded mixture (masterbatch) . To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

Moreover, the unvulcanized rubber compositions prepared as above were each formed into a cap tread shape and assembled with other tire components, followed by vulcanization at 170°C for 15 minutes to prepare a test studless winter tire (tire size: 195/65R15) .

The test studless winter tires prepared as above were stored at room temperature in a dark place for three months and then evaluated as follows. Tables 1 and 2 show the results.

<Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The values in Table 1 were calculated from the equation below using Comparative Example 1 as a reference. A higher index indicates better performance on ice.

(Performance on ice) = (Brake stopping distance of Comparative Example 1)/(Stopping distance of each formulation example) × 100

Moreover, the values in Table 2 were calculated from the equation below using Comparative Example 11 as a reference. A higher index indicates better performance on ice.

(Performance on ice) = (Brake stopping distance of Comparative Example 11)/(Stopping distance of each formulation example) × 100

<Pattern noise-reducing properties>

We calculated the rate of reduction in pattern noise after the running conditions indicated below when compared to before running. The thus calculated values (rates of reduction in pattern noise) are expressed as an index according to the equation below using Comparative Example 11 as a reference. A higher index indicates better pattern noise-reducing properties.

(Pattern noise-reducing properties) = (Rate of reduction in pattern noise of each formulation example)/(Rate of reduction in pattern noise of Comparative Example 11) × 100

(Running conditions)

The test studless winter tire of each example was mounted on each wheel of a vehicle (a front-engine, rear-wheel-drive vehicle of 2000 cc displacement made in Japan, rim: 7.5 J × 17, internal pressure: 220 kPa) and run 100 km on a dry road at ordinary temperature and then 4 km on a snowy or icy road at -10 to -1°C. The test site was the Okayama test track (dry road).

The pattern noise was determined by measuring the noise level inside the vehicle in the driver's window-side ear position during running at 60 km/h to determine the sound pressure level at a narrow-band peak of cavity resonance

noise around 500 Hz.

<Handling stability>

The test studless winter tire of each example was mounted on a front-engine, rear-wheel-drive car of 2000 cc displacement made in Japan and a test driver drove the car on a dry asphalt test track with a road surface temperature of 25°C. Then, the test driver comprehensively evaluated steering response to small steering angle changes and response to sudden lane changes using the result of Comparative Example 11 taken as 100. A higher value indicates better handling stability.

[Table 1]

| | | Ex. 1 | Ex. 2 | Ex. 3 | Ex. 4 | Ex. 5 | Ex. 6 | Ex. 7 | Comp. Ex. 1 |
|---|---|---|---|---|---|---|---|---|---|
| Amount (parts by mass) | NR | 50 | 50 | 50 | 50 | 50 | 50 | 40 | 50 |
| | BR | 50 | 50 | 50 | 50 | 50 | 50 | 60 | 50 |
| | Carbon black | 5 | 5 | 5 | 5 | 5 | 5 | 5 | 5 |
| | Silica | 70 | 70 | 70 | 70 | 70 | 70 | 70 | 70 |
| | Silane coupling agent | 8 | 8 | 8 | 8 | 8 | 8 | 8 | 8 |
| | Water-soluble fine particle 1 | 25 | 35 | — | — | 25 | 25 | 25 | — |
| | Water-soluble fine particle 2 | — | — | 25 | — | — | — | — | — |
| | Water-soluble fine particle 3 | — | — | — | 25 | — | — | — | — |
| | Wax | 1 | 1 | 1 | 1 | 1 | 1 | 1 | 1 |
| | Antioxidant | 2 | 2 | 2 | 2 | 2 | 2 | 2 | 2 |
| | Oil | 30 | 30 | 30 | 30 | 20 | 10 | 30 | 30 |
| | Resin | — | — | — | — | 10 | 20 | — | — |
| | Stearic acid | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 |
| | Sulfur | 1 | 1 | 1 | 1 | 1 | 1 | 1 | 1 |
| | Vulcanization accelerator | 2 | 2 | 2 | 2 | 2 | 2 | 2 | 2 |
| Evaluation | Performance on ice | 125 | 130 | 128 | 125 | 125 | 125 | 125 | 100 |

Table 1 shows that performance on ice was improved in the examples containing an isoprene-based rubber, a conjugated diene polymer, a water-soluble fine particle, and a liquid plasticizer in an amount not more than a predetermined value.

[Table 2]

| | Ex.11 | Ex.12 | Ex.13 | Ex.14 | Comp. Ex. 11 |
|---|---|---|---|---|---|
| NR | 30 | 30 | 30 | 30 | 30 |
| BR | 70 | 70 | 70 | 70 | 70 |
| Carbon black | 10 | 10 | 10 | 10 | 10 |
| Silica | 60 | 60 | 60 | 60 | 60 |
| Silane coupling agent | 6 | 6 | 6 | 6 | 6 |
| Water-soluble fine particle 1 | 20 | - | - | 40 | - |
| Water-soluble fine particle 2 | - | 25 | | - | - |
| Water-soluble fine particle 3 | - | - | 25 | - | - |
| Wax | 1 | 1 | 1 | 1 | 1 |
| Antioxidant | 2 | 2 | 2 | 2 | 2 |

(continued)

| | Ex.11 | Ex.12 | Ex.13 | Ex.14 | Comp. Ex. 11 |
|---|---|---|---|---|---|
| Oil | 25 | 25 | 25 | 25 | 25 |
| Stearic acid | 1 | 1 | 1 | 1 | 1 |
| Zinc oxide | 1.5 | 1.5 | 1.5 | 1.5 | 1.5 |
| Sulfur | 1 | 1 | 1 | 1 | 1 |
| Vulcanization accelerator | 2 | 2 | 2 | 2 | 2 |
| Performance on ice | 110 | 112 | 115 | 120 | 100 |
| Pattern noise-reducing properties | 102 | 105 | 105 | 110 | 100 |
| Handling stability | 102 | 101 | 102 | 100 | 100 |

Examples and comparative examples of each suitable embodiment of the present invention are shown below.

[First embodiment]

The chemicals used in examples and comparative examples are listed below.

Natural rubber (NR): RSS#3
Polybutadiene rubber (BR): BR150B available from Ube Industries, Ltd. (cis content: 95% by mass or higher)
Carbon black: Seast N220 available from Mitsubishi Chemical Corporation
Silica: Ultrasil VN3 available from Evonik Degussa ($N_2SA$: 172 $m^2/g$)
Silane coupling agent: Si266 available from Evonik Degussa
Water-soluble fine particle 1: MN-00 available from Umai Chemical Co., Ltd. (magnesium sulfate, median particle size (median size): 75 μm)
Water-soluble fine particle 2: USN-00 available from Umai Chemical Co., Ltd. (extremely fine particle magnesium sulfate, median particle size (median size): 3 μm)
Water-soluble fine particle 3: sodium lignin sulfonate available from Tokyo Chemical Industry Co., Ltd. (median particle size (median size): 100 μm)
Wax: Ozoace wax available from Nippon Seiro Co., Ltd.
Antioxidant: NOCRAC 6C available from Ouchi Shinko Chemical Industrial Co., Ltd.
Oil: PS-32 (mineral oil) available from Idemitsu Kosan Co., Ltd.
Resin (1): YS resin SX100 available from Yasuhara Chemical Co., Ltd. (styrene copolymer resin, softening point: 100 ± 5°C)
Resin (2): YS resin PX1250 available from Yasuhara Chemical Co., Ltd. (polyterpene resin, softening point: 125 ± 5°C)
Stearic acid: KIRI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

[Measurement of median particle size (median size) of water-soluble fine particle]

The median particle size of the water-soluble fine particles was measured by laser diffraction using SALD-2000J available from Shimadzu Corporation (the following measurement procedure was used).

<Measurement procedure>

Each water-soluble fine particle was dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples and Comparative Examples>

Using the recipes shown in Table 3, a 1.7 L Banbury mixer was charged with the natural rubber and silica, and with the polybutadiene rubber and silica, and they were kneaded at 150°C for three minutes to give a kneaded mixture (masterbatch) . To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

The unvulcanized rubber composition was press-vulcanized at 170°C for 12 minutes using a 0.5 mm-thick mold to obtain a vulcanized rubber composition.

Separately, the unvulcanized rubber compositions prepared as above were each formed into a cap tread shape and assembled with other tire components, followed by vulcanization at 170°C for 15 minutes to prepare a test studless winter tire (tire size: 195/65R15).

The vulcanized rubber compositions and test studless winter tires prepared as above were stored at room temperature in a dark place for three months and then evaluated as follows.
Table 3 shows the results.

<Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The performance on ice was calculated from the equation below using Comparative Example 1-1 as a reference. A higher index indicates better performance on ice.

(Performance on ice) = (Brake stopping distance of Comparative Example 1-1)/(Stopping distance of each formulation example) × 100

<Wet grip performance>

The test studless winter tires were mounted on a front-engine, rear-wheel-drive car of 2000 cc displacement made in Japan. The braking distance of the car with an initial speed of 100 km/h under wet road conditions was determined and expressed as an index using the equation below, with Comparative Example 1-1 set equal to 100. A higher index indicates better wet grip performance.

(Wet grip performance index) = (Braking distance of Comparative Example 1-1)/(Braking distance of each formulation example) × 100

<Anti-snow sticking properties>

The test studless winter tires were mounted on a front-engine, rear-wheel-drive car of 2000 cc displacement made in Japan. After the car travelled 5 km on a snowy road, the tires were visually observed for snow sticking to them and rated relative to Comparative Example 1-1 given a rating of 100. A higher rating means less snow sticking and therefore better anti-snow sticking properties.

<Low-temperature cornering performance>

The cornering performance of the test studless winter tires was evaluated under the following conditions. The test tires were mounted on a front-engine, rear-wheel-drive car of 2000 cc displacement made in Japan, and a test driver drove the car 20 laps around a figure-eight track consisting of two circles with a diameter of 14 m at an air temperature of 10°C or lower. The driver subjectively evaluated handling stability during turning. In the subjective evaluation, the tires

of Comparative Example 1-1 were rated 100, and then the tires were rated 120 if the driver determined that the performance was apparently improved, and 140 if the performance was improved as never before.

[Table 3]

| | | Example | | | | | | | | Comparative Example | | | | | |
|---|---|---|---|---|---|---|---|---|---|---|---|---|---|---|---|
| | | 1-1 | 1-2 | 1-3 | 1-4 | 1-5 | 1-6 | 1-7 | 1-8 | 1-1 | 1-2 | 1-3 | 1-4 | 1-5 | 1-6 |
| Amount (parts by mass) | NR | 40 | 40 | 40 | 40 | 40 | 40 | 40 | 50 | 40 | 40 | 40 | 40 | 40 | 40 |
| | BR | 60 | 60 | 60 | 60 | 60 | 60 | 60 | 50 | 60 | 60 | 60 | 60 | 60 | 60 |
| | Carbon black | 5 | 5 | 5 | 5 | 5 | 5 | 5 | 5 | 5 | 5 | 5 | 5 | 5 | 5 |
| | Silica | 60 | 60 | 60 | 60 | 60 | 60 | 60 | 60 | 60 | 60 | 60 | 60 | 60 | 60 |
| | Silane coupling agent | 8 | 8 | 8 | 8 | 8 | 8 | 8 | 8 | 8 | 8 | 8 | 8 | 8 | 8 |
| | Water-soluble fine particle 1 | 25 | 25 | 25 | 35 | 25 | — | — | 25 | 25 | 25 | — | — | — | — |
| | Water-soluble fine particle 2 | — | — | — | — | — | 25 | — | — | — | — | — | — | — | — |
| | Water-soluble fine particle 3 | — | — | — | — | — | — | 25 | — | — | — | — | — | — | — |
| | Wax | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 |
| | Oil | 20 | 20 | 10 | 10 | 30 | 20 | 20 | 20 | 40 | 40 | 40 | 20 | 30 | 40 |
| | Resin (1) | 20 | — | — | — | 30 | 20 | 20 | 20 | 30 | 10 | 30 | 30 | 10 | 10 |
| | Resin (2) | — | 20 | 30 | 30 | — | — | — | — | — | — | — | — | — | — |
| | Stearic acid | 1 | 1 | 1 | 1 | 1 | 1 | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 |
| | Sulfur | 1 | 1 | 1 | 1 | 1 | 1 | 1 | 1 | 1 | 1 | 1 | 1 | 1 | 1 |
| | Vulcanization accelerator | 2 | 2 | 2 | 2 | 2 | 2 | 2 | 2 | 2 | 2 | 2 | 2 | 2 | 2 |
| Evaluation | Performance on ice | 105 | 110 | 115 | 120 | 110 | 112 | 110 | 110 | 100 | 95 | 85 | 80 | 75 | 80 |
| | Wet grip performance | 110 | 110 | 110 | 110 | 115 | 110 | 110 | 110 | 100 | 90 | 100 | 95 | 90 | 85 |
| | Anti-snow sticking properties | 110 | 120 | 125 | 125 | 115 | 110 | 110 | 110 | 100 | 80 | 100 | 80 | 80 | 100 |
| | Low-temperature cornering performance | 120 | 120 | 110 | 110 | 120 | 120 | 120 | 120 | 100 | 100 | 100 | 100 | 100 | 100 |

Table 3 shows that an excellent balance between performance on ice and wet grip performance and further a balance between performance on ice, wet grip performance, anti-snow sticking properties, and low-temperature cornering performance were achieved in the examples containing an isoprene-based rubber, BR, a predetermined amount of a resin (solid resin), a water-soluble fine particle, and a small amount of a liquid plasticizer.

In particular, comparisons of Comparative Example 1-6 (with a low resin content, no water-soluble fine particle, and a high oil content), Comparative Example 1-2 (with a water-soluble fine particle), Comparative Example 1-3 (with a predetermined resin content), Comparative Example 1-5 (with a low oil content), and Example 1-5 (with a predetermined resin content, a water-soluble fine particle, and a low oil content) demonstrated that combining a resin content of 15 to 40 parts by mass, a liquid plasticizer content of 30 parts by mass or less, and addition of a water-soluble fine particle had the following effects: the balance between performance on ice and wet grip performance and the balance between performance on ice, wet grip performance, anti-snow sticking properties, and low-temperature cornering performance were synergistically improved.

[Second embodiment]

The chemicals used in examples and comparative examples are listed below.

Natural rubber (NR): RSS#3
Polybutadiene rubber (BR): BR150B available from Ube Industries, Ltd. (cis content: 95% by mass or higher)
Carbon black: Seast N220 available from Mitsubishi Chemical Corporation
Silica (1): Ultrasil VN3 available from Evonik Degussa ($N_2SA$: 172 $m^2/g$)
Silica (2): 9000GR available from Evonik Degussa ($N_2SA$: 229 $m^2/g$)
Silane coupling agent: Si266 available from Evonik Degussa
Water-soluble fine particle 1: MN-00 available from Umai Chemical Co., Ltd. (magnesium sulfate, median particle size (median size): 75 $\mu$m)
Water-soluble fine particle 2: USN-00 available from Umai Chemical Co., Ltd. (extremely fine particle magnesium sulfate, median particle size (median size): 3 $\mu$m)
Water-soluble fine particle 3: sodium lignin sulfonate available from Tokyo Chemical Industry Co., Ltd. (median particle size (median size): 100 $\mu$m)
Wax: Ozoace wax available from Nippon Seiro Co., Ltd.
Antioxidant: NOCRAC 6C available from Ouchi Shinko Chemical Industrial Co., Ltd.
Oil: PS-32 (mineral oil) available from Idemitsu Kosan Co., Ltd.
Resin: YS resin SX100 available from Yasuhara Chemical Co., Ltd. (styrene copolymer resin)
Stearic acid: KIRI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator NS: NOCCELER NS available from Ouchi Shinko Chemical Industrial Co., Ltd.

[Measurement of median particle size (median size) of water-soluble fine particle]

The median particle size of the water-soluble fine particles was measured by laser diffraction using SALD-2000J available from Shimadzu Corporation (the following measurement procedure was used).

<Measurement procedure>

Each water-soluble fine particle was dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples and Comparative Examples>

Using the recipes shown in Table 4, a 1.7 L Banbury mixer was charged with the natural rubber and silica, and with the polybutadiene rubber and silica, and they were kneaded at 150°C for three minutes to give a kneaded mixture (masterbatch) . To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

The unvulcanized rubber composition was press-vulcanized at 170°C for 12 minutes using a 0.5 mm-thick mold to obtain a vulcanized rubber composition.

Separately, the unvulcanized rubber compositions prepared as above were each formed into a cap tread shape and assembled with other tire components, followed by vulcanization at 170°C for 15 minutes to prepare a test studless winter tire (tire size: 195/65R15).

The vulcanized rubber compositions and test studless winter tires prepared as above were stored at room temperature in a dark place for three months and then evaluated as follows.
Table 4 shows the results.

<Abrasion resistance>

The abrasion loss of the vulcanized rubber compositions was measured using a Lambourn abrasion tester (Iwamoto Seisakusho Co., Ltd.) at a surface rotational speed of 50 m/min, an applied load of 3.0 kg, a sand feed rate of 15 g/min, and a slip ratio of 20%. A reciprocal of the abrasion loss was calculated. The reciprocal of the abrasion loss of Comparative Example 2-1 is set equal to 100, and the reciprocals of the abrasion losses of the other formulation examples are expressed as an index. A higher index indicates better abrasion resistance.

<Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The performance on ice was calculated from the equation below using Comparative Example 2-1 as a reference. A higher index indicates better performance on ice.

$$\text{(Performance on ice)} = \text{(Brake stopping distance of Comparative Example 2-1)}/\text{(Stopping distance of each formulation example)} \times 100$$

<High-temperature handling stability>

The test studless winter tires were mounted on each wheel of a test car (a front-engine, front-wheel-drive car made in Japan, 2000 cc displacement), and a test driver drove the car in a zig-zag fashion at an air temperature of 20°C or higher. Then, the driver subjectively evaluated stability of steering control. The results are expressed as an index, with Comparative Example 2-1 set equal to 100. A higher index indicates better high-temperature handling stability.

[Table 4]

| | | Example | | | | | | | | | Comparative Example | | | | | |
|---|---|---|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-1 | 2-2 | 2-3 | 2-4 | 2-5 | 2-6 |
| Amount (parts by mass) | NR | 50 | 50 | 50 | 50 | 50 | 50 | 50 | 50 | 40 | 50 | 50 | 50 | 50 | 50 | 50 |
| | BR | 50 | 50 | 50 | 50 | 50 | 50 | 50 | 50 | 60 | 50 | 50 | 50 | 50 | 50 | 50 |
| | Carbon black | 5 | 5 | 5 | 5 | 5 | 5 | 5 | 5 | 5 | 5 | 5 | 5 | 5 | 5 | 5 |
| | Silica (1) | 110 | 110 | 110 | — | 110 | 120 | 110 | 110 | 110 | 110 | 100 | 110 | 110 | 100 | 100 |
| | Silica (2) | — | — | — | 110 | — | — | — | — | — | — | — | — | — | — | — |
| | Silane coupling agent | 8 | 8 | 8 | 8 | 8 | 8 | 8 | 8 | 8 | 8 | 8 | 8 | 8 | 8 | 8 |
| | Water-soluble fine particle 1 | 25 | 25 | 25 | 25 | 35 | 25 | — | — | 25 | 25 | 25 | — | — | — | — |
| | Water-soluble fine particle 2 | — | — | — | — | — | — | 25 | — | — | — | — | — | — | — | — |
| | Water-soluble fine particle 3 | — | — | — | — | — | — | — | 25 | — | — | — | — | — | — | — |
| | Wax | 1 | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 | 2 |
| | Oil | 30 | 20 | 10 | 30 | 30 | 30 | 30 | 30 | 30 | 40 | 40 | 40 | 30 | 30 | 40 |
| | Resin | — | 10 | 20 | — | — | — | — | — | — | — | — | — | — | — | — |
| | Stearic acid | 1 | 1 | 1 | 1 | 1 | 1 | 1 | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Sulfur | 1 | 1 | 1 | 1 | 1 | 1 | 1 | 1 | 1 | 1 | 1 | 1 | 1 | 1 | 1 |
| | Vulcanization accelerator NS | 2 | 2 | 2 | 2 | 2 | 2 | 2 | 2 | 2 | 2 | 2 | 2 | 2 | 2 | 2 |
| Evaluation | Performance on ice | 115 | 110 | 105 | 113 | 120 | 112 | 116 | 115 | 116 | 100 | 100 | 95 | 90 | 90 | 92 |
| | Abrasion resistance | 110 | 115 | 120 | 115 | 105 | 115 | 110 | 110 | 112 | 100 | 95 | 105 | 108 | 98 | 95 |
| | High-temperature handling stability | 115 | 120 | 125 | 115 | 115 | 120 | 115 | 115 | 115 | 100 | 95 | 95 | 100 | 90 | 88 |

Table 4 shows that an excellent balance between performance on ice and abrasion resistance and further a balance between performance on ice, abrasion resistance, and high-temperature handling stability were achieved in the

examples containing an isoprene-based rubber, BR, a large amount of silica, a water-soluble fine particle, and a small amount of a liquid plasticizer.

In particular, comparisons of Comparative Example 2-6 (with a low silica content, no water-soluble fine particle, and a high oil content), Comparative Example 2-2 (with a water-soluble fine particle), Comparative Example 2-3 (with a high silica content), Comparative Example 2-5 (with a low oil content), and Example 2-1 (with a high silica content, a water-soluble fine particle, and a low oil content) demonstrated that combining a silica content of 105 parts by mass or more, a liquid plasticizer content of 30 parts by mass or less, and addition of a water-soluble fine particle had the following effects: the balance between performance on ice and abrasion resistance and the balance between performance on ice, abrasion resistance, and high-temperature handling stability were synergistically improved.

[Third embodiment]

The chemicals used in examples and comparative examples are listed below.

Natural rubber (NR): RSS#3
Polybutadiene rubber (BR): BR150B available from Ube Industries, Ltd. (cis content: 95% by mass or higher)
Carbon black: Seast N220 available from Mitsubishi Chemical Corporation
Silica: Ultrasil VN3 available from Evonik Degussa ($N_2SA$: 172 $m^2/g$)
Silane coupling agent: Si266 available from Evonik Degussa
Water-soluble fine particle 1: MN-00 available from Umai Chemical Co., Ltd. (magnesium sulfate, median particle size (median size): 75 μm)
Water-soluble fine particle 2: USN-00 available from Umai Chemical Co., Ltd. (extremely fine particle magnesium sulfate, median particle size (median size): 3 μm)
Water-soluble fine particle 3: sodium lignin sulfonate available from Tokyo Chemical Industry Co., Ltd. (median particle size (median size): 100 μm)
Wax: Ozoace wax available from Nippon Seiro Co., Ltd.
Antioxidant: NOCRAC 6C available from Ouchi Shinko Chemical Industrial Co., Ltd.
Plant oil: sunflower oil available from The Nisshin OilliO Groups, Ltd. (glycerol fatty acid triester, glass transition temperature: -60°C, melting point: -15°C, oleic acid content: 55% by mass, iodine number: 80)
Liquid diene polymer: FB-823 available from Kuraray Co., Ltd. (liquid farnesene butadiene copolymer, glass transition temperature: -78°C, weight average molecular weight: 50,000, farnesene/butadiene ratio = 80/20)
Mineral oil: paraffinic process oil (glass transition temperature: -45°C)
Stearic acid: KIRI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

[Measurement of median particle size (median size) of water-soluble fine particle]

The median particle size of the water-soluble fine particles was measured by laser diffraction using SALD-2000J available from Shimadzu Corporation (the following measurement procedure was used).

<Measurement procedure>

Each water-soluble fine particle was dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples and Comparative Examples>

Using the recipes shown in Table 5, a 1.7 L Banbury mixer was charged with the natural rubber and silica, and with the polybutadiene rubber and silica, and they were kneaded at 150°C for three minutes to give a kneaded mixture (masterbatch) . To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

The unvulcanized rubber composition was press-vulcanized at 170°C for 12 minutes using a 0.5 mm-thick mold

to obtain a vulcanized rubber composition.

Separately, the unvulcanized rubber compositions prepared as above were each formed into a cap tread shape and assembled with other tire components, followed by vulcanization at 170°C for 15 minutes to prepare a test studless winter tire (tire size: 195/65R15).

The vulcanized rubber compositions and test studless winter tires prepared as above were stored at room temperature in a dark place for three months and then evaluated as follows.
Table 5 shows the results.

<Abrasion resistance>

The abrasion loss of the vulcanized rubber compositions was measured using a Lambourn abrasion tester (Iwamoto Seisakusho Co., Ltd.) at a surface rotational speed of 50 m/min, an applied load of 3.0 kg, a sand feed rate of 15 g/min, and a slip ratio of 20%. A reciprocal of the abrasion loss was calculated. The reciprocal of the abrasion loss of Comparative Example 3-1 is set equal to 100, and the reciprocals of the abrasion losses of the other formulation examples are expressed as an index. A higher index indicates better abrasion resistance.

<Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The performance on ice was calculated from the equation below using Comparative Example 3-1 as a reference. A higher index indicates better performance on ice.

$$\text{(Performance on ice)} = \text{(Brake stopping distance of Comparative Example 3-1)}/\text{(Stopping distance of each formulation example)} \times 100$$

<Rolling resistance (fuel economy)>

The rolling resistance of the test studless winter tires was measured using a rolling resistance tester by running the tires mounted on a 15 × 6 JJ rim at an internal pressure of 230 kPa, a load of 3.43 kN, and a speed of 80 km/h. The rolling resistances are expressed as an index, with Comparative Example 3-1 set equal to 100. A higher index indicates a lower rolling resistance and therefore better fuel economy.

<Handling stability>

The test studless winter tires were mounted on each wheel of a test car (a front-engine, front-wheel-drive car made in Japan, 2000 cc displacement), and a test driver drove the car in a zig-zag fashion. Then, the driver subjectively evaluated stability of steering control. The results are expressed as an index, with Comparative Example 3-1 set equal to 100. A higher index indicates better handling stability.

[Table 5]

| | | Example 3-1 | Example 3-2 | Example 3-3 | Example 3-4 | Example 3-5 | Example 3-6 | Example 3-7 | Example 3-8 | Comparative Example 3-1 | Comparative Example 3-2 | Comparative Example 3-3 | Comparative Example 3-4 | Comparative Example 3-5 | Comparative Example 3-6 |
|---|---|---|---|---|---|---|---|---|---|---|---|---|---|---|---|
| Amount (parts by mass) | NR | 40 | 40 | 40 | 40 | 40 | 50 | 40 | 40 | 40 | 40 | 40 | 40 | 40 | 40 |
| | BR | 60 | 60 | 60 | 60 | 60 | 50 | 60 | 60 | 60 | 60 | 60 | 60 | 60 | 60 |
| | Carbon black | 5 | 5 | 5 | 5 | 5 | 5 | 5 | 5 | 5 | 5 | 5 | 5 | 5 | 5 |
| | Silica | 60 | 60 | 60 | 60 | 60 | 60 | 60 | 60 | 60 | 60 | 60 | 60 | 60 | 60 |
| | Silane coupling agent | 8 | 8 | 8 | 8 | 8 | 8 | 8 | 8 | 8 | 8 | 8 | 8 | 8 | 8 |
| | Water-soluble fine particle 1 | 25 | 25 | 35 | - | - | 25 | 25 | 25 | 25 | - | 25 | - | - | - |
| | Water-soluble fine particle 2 | - | - | - | 25 | - | - | - | - | - | - | - | - | - | - |
| | Water-soluble fine particle 3 | - | - | - | - | 25 | - | - | - | - | - | - | - | - | - |
| | Wax | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 |
| | Plant oil | 20 | - | 20 | 20 | 20 | 20 | 10 | 30 | - | 20 | 40 | 40 | - | - |
| | Liquid diene polymer | - | 20 | - | - | - | - | - | - | - | - | - | - | - | - |
| | Mineral oil | - | - | - | - | - | - | - | - | 40 | - | - | - | 20 | 40 |
| | Stearic acid | 1 | 1 | 1 | 1 | 1 | 1 | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 |
| | Sulfur | 1 | 1 | 1 | 1 | 1 | 1 | 1 | 1 | 1 | 1 | 1 | 1 | 1 | 1 |
| | Vulcanization accelerator | 2 | 2 | 2 | 2 | 2 | 2 | 2 | 2 | 2 | 2 | 2 | 2 | 2 | 2 |
| Evaluation | Performance on ice | 110 | 108 | 115 | 112 | 110 | 110 | 110 | 110 | 100 | 92 | 110 | 90 | 85 | 85 |
| | Handling stability | 128 | 130 | 131 | 128 | 128 | 128 | 128 | 126 | 100 | 111 | 100 | 100 | 111 | 100 |
| | Rolling resistance | 107 | 107 | 105 | 107 | 107 | 107 | 109 | 105 | 100 | 102 | 101 | 97 | 102 | 95 |
| | Abrasion resistance | 106 | 108 | 101 | 106 | 106 | 107 | 109 | 104 | 100 | 109 | 101 | 106 | 107 | 103 |

Table 5 shows that an excellent balance between performance on ice and abrasion resistance and further a balance between performance on ice, abrasion resistance, fuel economy, and handling stability were achieved in the

examples containing an isoprene-based rubber, BR, a water-soluble fine particle, and a liquid plasticizer having a predetermined glass transition temperature or lower in an amount not more than a predetermined value.

In particular, comparisons of Comparative Example 3-6 (with no water-soluble fine particle and a high content of high Tg oil), Comparative Example 3-1 (with a water-soluble fine particle), Comparative Example 3-4 (with a low Tg oil), Comparative Example 3-5 (with a low oil content), and Example 3-1 (with a water-soluble fine particle and a low content of low Tg oil) demonstrated that combining a content of a liquid plasticizer with a glass transition temperature of -50°C or lower of 30 parts by mass or less and addition of a water-soluble fine particle had the following effects: the balance between performance on ice and abrasion resistance and the balance between performance on ice, abrasion resistance, fuel economy, and handling stability were synergistically improved.

[Fourth embodiment]

The chemicals used in examples, reference example, and comparative examples are listed below.

Natural rubber (NR): RSS#3
Polybutadiene rubber (BR): BR150B available from Ube Industries, Ltd. (cis content: 95% by mass or higher)
Styrene butadiene rubber (SBR) : NS616 available from Zeon Corporation (styrene content: 21% by mass)
Carbon black: Seast N220 available from Mitsubishi Chemical Corporation
Silica: Ultrasil VN3 available from Evonik Degussa ($N_2SA$: 172 $m^2/g$)
Silane coupling agent: Si266 available from Evonik Degussa
Water-soluble fine particle (1): MN-00 available from Umai Chemical Co., Ltd. (magnesium sulfate, median particle size (median size): 75 μm)
Water-soluble fine particle (2): USN-00 available from Umai Chemical Co., Ltd. (extremely fine particle magnesium sulfate, median particle size (median size): 3 μm)
Water-soluble fine particle (3) : sodium lignin sulfonate available from Tokyo Chemical Industry Co., Ltd. (median particle size (median size): 100 μm)
Wax: Ozoace wax available from Nippon Seiro Co., Ltd.
Antioxidant: NOCRAC 6C available from Ouchi Shinko Chemical Industrial Co., Ltd.
Oil: PS-32 (mineral oil) available from Idemitsu Kosan Co., Ltd.
Resin: YS resin SX100 available from Yasuhara Chemical Co., Ltd. (styrene copolymer resin)
Stearic acid: TSUBAKI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

[Measurement of median particle size (median size) of water-soluble fine particle]

The median particle size of the water-soluble fine particles was measured by laser diffraction using SALD-2000J available from Shimadzu Corporation (the following measurement procedure was used).

<Measurement procedure>

Each water-soluble fine particle was dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples (Ex.), Reference Example (Ref. Ex.), and Comparative Examples (Comp. Ex.)>

Using the recipes shown in Table 6, a 1.7 L Banbury mixer was charged with the natural rubber and silica, and with the polybutadiene rubber and silica, and they were kneaded at 150°C for three minutes to give a kneaded mixture (masterbatch) . To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

The unvulcanized rubber composition was press-vulcanized at 170°C for 12 minutes using a 0.5 mm-thick mold to obtain a vulcanized rubber composition.

Separately, the unvulcanized rubber compositions prepared as above were each formed into a cap tread shape

and assembled with other tire components, followed by vulcanization at 170°C for 15 minutes to prepare a test studless winter tire (tire size: 195/65R15).

The vulcanized rubber compositions and test studless winter tires prepared as above were stored at room temperature in a dark place for three months and then evaluated as follows. Table 6 shows the results.

<Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The performance on ice was calculated from the equation below using Comparative Example 4-1 as a reference. A higher index indicates better performance on ice.

$$\text{(Performance on ice)} = \text{(Brake stopping distance of Comparative Example 4-1)}/\text{(Stopping distance of each formulation example)} \times 100$$

<Wet grip performance>

The test studless winter tires were mounted on a front-engine, rear-wheel-drive car of 2000 cc displacement made in Japan. The braking distance of the car with an initial speed of 100 km/h under wet road conditions was determined and expressed as an index using the equation below, with Comparative Example 4-1 set equal to 100. A higher index indicates better wet grip performance.

$$\text{(Wet grip performance index)} = \text{(Braking distance of Comparative Example 4-1)}/\text{(Braking distance of each formulation example)} \times 100$$

<Handling stability>

The test studless winter tires were mounted on each wheel of a test car (a front-engine, front-wheel-drive car made in Japan, 2000 cc displacement), and a test driver drove the car in a zig-zag fashion. Then, the driver subjectively evaluated stability of steering control. The results are expressed as an index, with Comparative Example 4-1 set equal to 100. A higher index indicates better handling stability.

<Tensile strength>

No. 3 dumbbell specimens of the vulcanized rubber compositions were subjected to a tensile test in accordance with JIS K 6251 to measure the tensile strength at break (TB) and elongation at break (EB, %). Then, the value TB×EB/2 was defined as tensile strength. The tensile strength of each formulation example is expressed as an index using the equation below, with Comparative Example 4-1 set equal to 100. A higher index indicates better tensile strength.

$$\text{(Tensile strength index)} = \text{(TB×EB/2 of each formulation example)}/\text{(TB×EB/2 of Comparative Example 4-1)} \times 100$$

[Table 6]

| | | Ex. | | | | | | | | Comp. Ex. | Ref. Ex. | Comp. Ex. | | | | |
|---|---|---|---|---|---|---|---|---|---|---|---|---|---|---|---|---|
| | | 4-1 | 4-2 | 4-3 | 4-4 | 4-5 | 4-6 | 4-7 | 4-8 | 4-1 | 4-2 | 4-3 | 4-4 | 4-5 | 4-6 | 4-7 |
| Amount (parts by mass) | NR | 50 | 50 | 50 | 50 | 40 | 50 | 50 | 45 | 50 | 50 | 50 | 50 | 50 | 50 | 50 |
| | BR | 45 | 45 | 45 | 45 | 52 | 45 | 49 | 45 | 45 | 50 | 50 | 45 | 45 | 50 | 50 |
| | SBR | 5 | 5 | 5 | 5 | 8 | 5 | 1 | 10 | 5 | — | — | 5 | 5 | — | — |
| | Carbon black | 5 | 5 | 5 | 5 | 5 | 5 | 5 | 5 | 5 | 5 | 5 | 5 | 5 | 5 | 5 |
| | Silica | 70 | 70 | 70 | 70 | 70 | 70 | 70 | 70 | 70 | 70 | 70 | 80 | 80 | 80 | 80 |
| | Silane coupling agent | 8 | 8 | 8 | 8 | 8 | 8 | 8 | 8 | 8 | 8 | 8 | 8 | 8 | 8 | 8 |
| | Water-soluble fine particle (1) | 25 | 25 | 25 | — | 25 | — | 25 | 25 | 25 | 25 | 25 | — | — | — | — |
| | Water-soluble fine particle (2) | — | — | — | 35 | — | — | — | — | — | — | — | — | — | — | — |
| | Water-soluble fine particle (3) | — | — | — | — | — | 25 | — | — | — | — | — | — | — | — | — |
| | Wax | 1 | 1 | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 | 2 | 2 |
| | Oil | 30 | 20 | 10 | 30 | 10 | 30 | 30 | 30 | 40 | 30 | 40 | 40 | 30 | 30 | 50 |
| | Resin | — | 10 | 20 | — | 20 | — | — | — | — | — | — | — | — | — | — |
| | Stearic acid | 1 | 1 | 1 | 1 | 1 | 1 | 1 | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Sulfur | 1 | 1 | 1 | 1 | 1 | 1 | 1 | 1 | 1 | 1 | 1 | 1 | 1 | 1 | 1 |
| | Vulcanization accelerator | 2 | 2 | 2 | 2 | 2 | 2 | 2 | 2 | 2 | 2 | 2 | 2 | 2 | 2 | 2 |
| Evaluation | Performance on ice | 100 | 100 | 100 | 110 | 105 | 102 | 106 | 95 | 100 | 105 | 105 | 85 | 85 | 90 | 90 |
| | Wet grip performance | 98 | 105 | 115 | 100 | 110 | 100 | 96 | 110 | 100 | 90 | 95 | 105 | 100 | 95 | 105 |
| | Handling stability | 110 | 115 | 120 | 110 | 125 | 110 | 113 | 120 | 100 | 95 | 90 | 95 | 98 | 90 | 85 |
| | Tensile strength | 110 | 110 | 110 | 100 | 115 | 112 | 106 | 115 | 100 | 95 | 90 | 105 | 110 | 105 | 95 |

Table 6 shows that an excellent balance between performance on ice and wet grip performance and further a balance between performance on ice, wet grip performance, tensile strength, and handling stability were achieved in the examples containing an isoprene-based rubber, BR, a predetermined amount of SBR, a water-soluble fine particle, and a small amount of a liquid plasticizer.

In particular, comparisons of Comparative Example 4-7 (with no SBR, no water-soluble fine particle, and a high oil content), Comparative Example 4-3 (with a water-soluble fine particle), Comparative Example 4-4 (with SBR), Comparative Example 4-6 (with a low oil content), and Example 4-1 (with SBR, a water-soluble fine particle, and a low oil content) demonstrated that combining a liquid plasticizer content of 30 parts by mass or less, a SBR content of 1 to 10% by mass, and addition of a water-soluble fine particle had the following effects: the balance between performance on ice and wet grip performance and the balance between performance on ice, wet grip performance, tensile strength, and handling stability were synergistically improved.

[Fifth embodiment]

<Synthesis Example 1 (Synthesis of conjugated diene polymer)>

A catalyst composition (molar ratio of iodine atom to lanthanoid-containing compound: 2.0) was previously prepared by reacting and aging 0.90 mmol of 1,3-butadiene with a cyclohexane solution containing 0.18 mmol of neodymium versatate, a toluene solution containing 3.6 mmol of methylalumoxane, a toluene solution containing 6.7 mmol of diisobutylaluminum hydride, and a toluene solution containing 0.36 mmol of trimethylsilyl iodide for 60 minutes at 30°C. Next, 2.4 kg of cyclohexane and 300 g of 1, 3-butadiene were introduced into a 5 L autoclave purged with nitrogen. Then, the catalyst composition was introduced into the autoclave, and a polymerization reaction was performed for two hours at 30°C to give a polymer solution. The conversion rate of the introduced 1,3-butadiene was almost 100%.

In order to measure the physical properties of the conjugated diene polymer (hereinafter, also referred to as "polymer"), i.e. the unmodified polymer, a 200 g portion of the polymer solution was taken, to which a methanol solution containing 1.5 g of 2,4-di-tert-butyl-p-cresol was added to stop the polymerization reaction. Thereafter, the solvent was removed by steam stripping, and the product was dried on a roll at 110°C to obtain a dry product which was used as the polymer.

The polymer was measured for physical properties as described below and found to have a Mooney viscosity ($ML_{1+4}$, 100°C) of 12, a molecular weight distribution (Mw/Mn) of 1.6, a cis-1,4 bond content of 99.2% by mass, and a 1,2-vinyl bond content of 0.21% by mass.

[Mooney viscosity ($ML_{1+4}$, 100°C)]

The Mooney viscosity was measured at 100°C in accordance with JIS K 6300 using an L-type rotor with a preheating time of 1 minute and a rotor operation time of 4 minutes.

[Molecular weight distribution (Mw/Mn)]

The molecular weight distribution was determined using a gel permeation chromatograph (trade name "HLC-8120GPC" available from Tosoh Corporation) and a differential refractometer as a detector under the following conditions and calibrated with polystyrene standards.

Column: two columns of trade name "GMHHXL" available from Tosoh Corporation;
Column temperature: 40°C;
Mobile phase: tetrahydrofuran, flow rate: 1.0 mL/min;
Sample concentration: 10 mg/20 mL.

[Cis-1,4 bond content, 1,2-vinyl bond content]

The cis-1,4 bond content and 1,2-vinyl bond content were determined by $^{1}H$-NMR and $^{13}C$-NMR analyses . The NMR analyses were carried out using "EX-270 (trade name) " available from Jeol Ltd. Specifically, in the $^{1}H$-NMR analysis, the ratio of 1,4-bonds and 1,2-bonds in the polymer was calculated from the signal intensities at 5.30-5.50 ppm (1,4-bond) and at 4.80-5.01 ppm (1,2-bond) . Also, in the $^{13}C$-NMR analysis, the ratio of cis-1,4 bonds and trans-1,4 bonds in the polymer was calculated from the signal intensities at 27.5 ppm (cis-1,4 bond) and at 32.8 ppm (trans-1,4 bond). These calculated ratios were used to determine the cis-1,4 bond content (% by mass) and 1,2-vinyl bond content (% by mass).

<Production Example 1 (Synthesis of modified conjugated diene polymer)>

A modified conjugated diene polymer (hereinafter, also referred to as "modified polymer") was produced by treating the polymer solution of the conjugated diene polymer prepared in Synthesis Example 1 as follows. To the polymer solution maintained at 30°C was added a toluene solution containing 1.71 mmol of 3-glycidoxypropyltrimethoxysilane, and they were reacted for 30 minutes to give a reaction solution. To the reaction solution was then added a toluene solution containing 1.71 mmol of 3-aminopropyltriethoxysilane, and they were stirred for 30 minutes. Subsequently, to the reaction solution was added a toluene solution containing 1.28 mmol of tetraisopropyl titanate, followed by stirring for 30 minutes. Then, the polymerization reaction was stopped by adding a methanol solution containing 1.5 g of 2,4-di-tert-butyl-p-cresol. The resulting solution was used as a modified polymer solution. The yield was 2.5 kg. To the modified polymer solution was then added 20 L of an aqueous solution with a pH of 10 adjusted with sodium hydroxide, followed by performing a condensation reaction at 110°C for two hours while removing the solvent. Thereafter, the reaction product was dried on a roll at 110°C to obtain a dry product which was used as the modified polymer.

The modified polymer was measured for physical properties as described below (but the molecular weight distribution (Mw/Mn) was measured under the same conditions as described for the polymer) and found to have a Mooney viscosity ($ML_{1+4}$, 125°C) of 46, a molecular weight distribution (Mw/Mn) of 2.4, a cold flow value of 0.3 mg/min, a temporal stability of 2, and a glass transition temperature of -106°C.

[Mooney viscosity ($ML_{1+4}$, 125°C)]

The Mooney viscosity was measured at 125°C in accordance with JIS K 6300 using an L-type rotor with a preheating time of 1 minute and a rotor operation time of 4 minutes.

[Cold flow value]

The cold flow value was measured by extruding the polymer through a 1/4 inch orifice at a pressure of 3.5 $lb/in^2$ and a temperature of 50°C. After allowing 10 minutes for the polymer to reach steady state, the rate of extrusion was measured and reported in milligrams per minute (mg/min).

[Temporal stability]

The temporal stability was determined by measuring the Mooney viscosity ($ML_{1+4}$, 125°C) after storage in a thermostatic bath at 90°C for two days, and using it in the expression below. A smaller value indicates better temporal stability. Expression: [Mooney viscosity ($ML_{1+4}$, 125°C) after storage in a thermostatic bath at 90°C for two days] - [Mooney viscosity ($ML_{1+4}$, 125°C) measured immediately after the synthesis]

[Glass transition temperature]

The glass transition temperature was defined as the glass transition onset temperature measured at a temperature increase rate of 10°C/min using a differential scanning calorimeter (Q200, TA Instruments Japan) in accordance with JIS K 7121.

The chemicals used in examples and comparative examples are listed below.

Natural rubber (NR): RSS#3
Modified conjugated diene polymer: the modified conjugated diene polymer synthesized in Production Example 1
Polybutadiene rubber (BR): BR150B available from Ube Industries, Ltd. (cis content: 95% by mass or higher)
Carbon black: Seast N220 available from Mitsubishi Chemical Corporation
Silica: Ultrasil VN3 available from Evonik Degussa ($N_2SA$: 172 $m^2/g$)
Silane coupling agent: Si266 available from Evonik Degussa
Water-soluble fine particle (1): MN-00 available from Umai Chemical Co., Ltd. (magnesium sulfate, median particle size (median size): 75 μm)
Water-soluble fine particle (2): USN-00 available from Umai Chemical Co., Ltd. (extremely fine particle magnesium sulfate, median particle size (median size): 3 μm)
Water-soluble fine particle (3) : sodium lignin sulfonate available from Tokyo Chemical Industry Co., Ltd. (median particle size (median size): 100 μm)
Wax: Ozoace wax available from Nippon Seiro Co., Ltd.
Antioxidant: NOCRAC 6C available from Ouchi Shinko Chemical Industrial Co., Ltd.
Oil: PS-32 (mineral oil) available from Idemitsu Kosan Co., Ltd.

Resin: YS resin SX100 available from Yasuhara Chemical Co., Ltd. (styrene copolymer resin)
Stearic acid: KIRI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

[Measurement of median particle size (median size) of water-soluble fine particle]

The median particle size of the water-soluble fine particles was measured by laser diffraction using SALD-2000J available from Shimadzu Corporation (the following measurement procedure was used).

<Measurement procedure>

Each water-soluble fine particle was dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples and Comparative Examples>

Using the recipes shown in Table 7, a 1.7 L Banbury mixer was charged with the natural rubber and silica, and with the modified conjugated diene polymer or polybutadiene rubber and silica, and they were kneaded at 150°C for three minutes to give a kneaded mixture (masterbatch) . To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.
The unvulcanized rubber composition was press-vulcanized at 170°C for 12 minutes using a 0.5 mm-thick mold to obtain a vulcanized rubber composition.
Separately, the unvulcanized rubber compositions prepared as above were each formed into a cap tread shape and assembled with other tire components, followed by vulcanization at 170°C for 15 minutes to prepare a test studless winter tire (tire size: 195/65R15).
The vulcanized rubber compositions and test studless winter tires prepared as above were stored at room temperature in a dark place for three months and then evaluated as follows.
Table 7 shows the results.

<Abrasion resistance>

The abrasion loss of the vulcanized rubber compositions was measured using a Lambourn abrasion tester (Iwamoto Seisakusho Co., Ltd.) at a surface rotational speed of 50 m/min, an applied load of 3.0 kg, a sand feed rate of 15 g/min, and a slip ratio of 20%. A reciprocal of the abrasion loss was calculated. The reciprocal of the abrasion loss of Comparative Example 5-1 is set equal to 100, and the reciprocals of the abrasion losses of the other formulation examples are expressed as an index. A higher index indicates better abrasion resistance.

<Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The performance on ice was calculated from the equation below using Comparative Example 5-1 as a reference. A higher index indicates better performance on ice.

$$\text{(Performance on ice)} = \text{(Brake stopping distance of Comparative Example 5-1)} / \text{(Stopping distance of each formulation example)} \times 100$$

<Rolling resistance (fuel economy)>

The rolling resistance of the test studless winter tires was measured using a rolling resistance tester by running the tires mounted on a 15 × 6 JJ rim at an internal pressure of 230 kPa, a load of 3.43 kN, and a speed of 80 km/h. The rolling resistances are expressed as an index, with Comparative Example 5-1 set equal to 100. A higher index indicates a lower rolling resistance and therefore better fuel economy.

<High-temperature handling stability>

The test studless winter tires were mounted on each wheel of a test car (a front-engine, front-wheel-drive car made in Japan, 2000 cc displacement), and a test driver drove the car in a zig-zag fashion at an air temperature of 20°C or higher. Then, the driver subjectively evaluated stability of steering control. The results are expressed as an index, with Comparative Example 5-1 set equal to 100. A higher index indicates better high-temperature handling stability.

[Table 7]

| | | Example 5-1 | Example 5-2 | Example 5-3 | Example 5-4 | Example 5-5 | Example 5-6 | Example 5-7 | Comparative Example 5-1 | Comparative Example 5-2 | Comparative Example 5-3 | Comparative Example 5-4 | Comparative Example 5-5 | Comparative Example 5-6 |
|---|---|---|---|---|---|---|---|---|---|---|---|---|---|---|
| Amount (parts by mass) | NR | 50 | 50 | 50 | 50 | 40 | 50 | 50 | 50 | 50 | 50 | 50 | 50 | 50 |
| | Modified conjugated diene polymer | 50 | 50 | 50 | 50 | 60 | 50 | 50 | 50 | — | 50 | 50 | — | — |
| | BR | — | — | — | — | — | — | — | — | 50 | — | — | 50 | 50 |
| | Carbon black | 5 | 5 | 5 | 5 | 5 | 3 | 5 | 5 | 5 | 5 | 5 | 5 | 5 |
| | Silica | 70 | 70 | 70 | 70 | 70 | 30 | 70 | 70 | 70 | 80 | 80 | 80 | 80 |
| | Silane coupling agent | 8 | 8 | 8 | 8 | 8 | 4 | 8 | 8 | 8 | 8 | 8 | 8 | 8 |
| | Water-soluble fine particle (1) | 25 | 25 | 25 | — | 25 | 25 | — | 25 | 25 | — | — | — | — |
| | Water-soluble fine particle (2) | — | — | — | 35 | — | — | — | — | — | — | — | — | — |
| | Water-soluble fine particle (3) | — | — | — | — | — | — | 25 | — | — | — | — | — | — |
| | Wax | 1 | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 | 2 |
| | Oil | 30 | 20 | 10 | 30 | 10 | 30 | 30 | 40 | 40 | 40 | 30 | 30 | 50 |
| | Resin | — | 10 | 20 | — | 20 | — | — | — | — | — | — | — | — |
| | Stearic acid | 1 | 1 | 1 | 1 | 1 | 1 | 1 | 1 | 1 | 1 | 1 | 1 | 1 |
| | Zinc oxide | 1.5 | 1.5 | 1.5 | 1.5 | 1.5 | 1.5 | 1.5 | 1.5 | 1.5 | 1.5 | 1.5 | 1.5 | 1.5 |
| | Sulfur | 1 | 1 | 1 | 1 | 1 | 1 | 1 | 1 | 1 | 1 | 1 | 1 | 1 |
| | Vulcanization accelerator | 2 | 2 | 2 | 2 | 2 | 2 | 2 | 2 | 2 | 2 | 2 | 2 | 2 |
| Evaluation | Performance on ice | 100 | 102 | 104 | 110 | 105 | 120 | 101 | 100 | 95 | 80 | 80 | 75 | 75 |
| | Rolling resistance | 105 | 106 | 108 | 105 | 110 | 120 | 105 | 100 | 90 | 90 | 95 | 90 | 90 |
| | Abrasion resistance | 110 | 115 | 120 | 105 | 125 | 90 | 112 | 100 | 95 | 110 | 115 | 110 | 90 |
| | High-temperature handling stability | 142 | 145 | 148 | 140 | 150 | 125 | 145 | 100 | 90 | 95 | 95 | 90 | 75 |

Table 7 shows that an excellent balance between performance on ice, abrasion resistance, fuel economy, and high-temperature handling stability was achieved in the examples containing an isoprene-based rubber, a modified

conjugated diene polymer, silica, a water-soluble fine particle, and a small amount of a liquid plasticizer.

In particular, comparisons of Comparative Example 5-6 (with no modified conjugated diene polymer, no water-soluble fine particle, and a high oil content), Comparative Example 5-2 (with a water-soluble fine particle), Comparative Example 5-3 (with a modified conjugated diene polymer), Comparative Example 5-5 (with a low oil content), and Example 5-1 (with a modified conjugated diene polymer, a water-soluble fine particle, and a low oil content) demonstrated that combining a liquid plasticizer content of 30 parts by mass or less, addition of a modified conjugated diene polymer, and addition of a water-soluble fine particle had the following effect: the balance between performance on ice, abrasion resistance, fuel economy, and high-temperature handling stability was synergistically improved.

## Claims

**1.** A tread rubber composition for studless winter tires, comprising:

a rubber component including an isoprene-based rubber and a conjugated diene polymer;
a water-soluble fine particle; and
a liquid plasticizer,
the liquid plasticizer being present in an amount of 30 parts by mass or less per 100 parts by mass of the rubber component.

**2.** The tread rubber composition for studless winter tires according to claim 1,
wherein the isoprene-based rubber is present in an amount of 20% by mass or more, and the conjugated diene polymer is present in an amount of 20% by mass or more, each based on 100% by mass of the rubber component, and the tread rubber composition comprises silica in an amount of 50% by mass or more based on a total of 100% by mass of silica and carbon black.

**3.** The tread rubber composition for studless winter tires according to claim 1 or 2,
wherein the water-soluble fine particle is present in an amount of 25 parts by mass or more per 100 parts by mass of the rubber component.

**4.** The tread rubber composition for studless winter tires according to any one of claims 1 to 3,
wherein the conjugated diene polymer has a cis content of 90% by mass or higher.

**5.** A studless winter tire, comprising a tread formed from the rubber composition according to any one of claims 1 to 4.

**6.** The studless winter tire according to claim 5,
wherein the tread of the studless winter tire has a road contact surface with pores having an average diameter of 0.1 to 100 μm after the following running conditions:
(Running conditions)
The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

**7.** The studless winter tire according to claim 5 or 6,
wherein the studless winter tire has a rate of reduction in pattern noise from before to after the following running conditions, which is enhanced by 2 to 10% as compared with a studless winter tire comprising a tread formed from a rubber composition having the same formulation except for containing no water-soluble fine particle:
(Running conditions)
The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

**INTERNATIONAL SEARCH REPORT**

International application No. PCT/JP2018/046868

A. CLASSIFICATION OF SUBJECT MATTER
Int.Cl. C08L9/00(2006.01)i, B60C1/00(2006.01)i, C08K3/36(2006.01)i, C08L7/00(2006.01)i

According to International Patent Classification (IPC) or to both national classification and IPC

B. FIELDS SEARCHED

Minimum documentation searched (classification system followed by classification symbols)
Int.Cl. C08L9/00, B60C1/00, C08K3/36, C08L7/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2017-537198 A (COMPAGNIE GENERALE DES ETABLISSEMENTS MICHELIN) 14 December 2017, claims 1, 25, 26, paragraph [0001], example C-5 & WO 2016/084984 A1, claims 1, 25, 26, paragraph [0001], example C-5 & EP 3224315 A1 & CA 2969106 A1 & CN 107001708 A | 1-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 March 2019 (01.03.2019) | 12 March 2019 (12.03.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009091482 A
- US 4414370 A
- JP S596207 A
- JP H558005 B
- JP H1313522 A
- US 5010166 A

### Non-patent literature cited in the description

- annual research report TREND. Toagosei Co., Ltd, 2000, vol. 3, 42-45
- *Fine Chemical,* 1994, vol. 23 (9), 5
- *J. Am. Chem. Soc.,* 1993, vol. 115, 4971
- *J. Am. Chem. Soc.,* 1995, vol. 117, 6465